(19) Europäisches Patentamt
European Patent Office
Office européen des brevets

(11) **EP 2 657 062 A1**

(12) **EUROPEAN PATENT APPLICATION**

(43) Date of publication:
**30.10.2013 Bulletin 2013/44**

(51) Int Cl.:
**B60L 11/18** (2006.01)        **B60L 15/20** (2006.01)

(21) Application number: **12165542.7**

(22) Date of filing: **25.04.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **Hitachi Automotive Systems, Ltd.**<br>**Hitachinaka-shi**<br>**Ibaraki**<br>**312-8503 (JP)** | (72) Inventors:<br>• **Horita, Yuki**<br>  **06220 Golfe Juan (FR)**<br>• **Lin, Lan**<br>  **06400 Cannes (FR)**<br><br>(74) Representative: **MERH-IP**<br>**Matias Erny Reichl Hoffmann**<br>**Paul-Heyse-Strasse 29**<br>**80336 München (DE)** |

(54) **Apparatus and method for controlling power level management of an electric power source of an electrically driven vehicle**

(57)     The present invention relates to an apparatus and a method for controlling power level management of an electric power source of an electrically driven vehicle which is chargeable when being electrically connected to an electric charging unit for charging the electric power source, the apparatus comprising memory means configured for storing power consumption information history data indicating one or more power consumption amount values of the chargeable electric power source, each power consumption amount value being associated with a unit time period of one or more past unit time periods, processing means configured for determining a target power level of the chargeable electric power source for a present unit time period or a future unit time period on the basis of the power consumption information history data stored in the memory means, and control means configured for controlling power level management of the chargeable electric power source on the basis of the target power level determined by the processing means, when the electric power source is electrically connected to the electric charging unit.

Fig. 1

**EP 2 657 062 A1**

**Description**

The present invention relates to an apparatus/system and a method for controlling power level management of an electric power source of an electrically driven vehicle which is chargeable when being electrically connected to an electric charging unit for charging the electric power source. In particular, the present invention relates to an apparatus/ system and a method for controlling charging and/or discharging of an in-vehicle battery.

**Background of the invention**

Electric vehicles and plug-in-hybrid vehicles are becoming popular recently because of their environmental and economical perspective. Such types of vehicles are driven partially or fully by one or more electric motor(s) using electric power stored in a power source such as a battery mounted to the vehicle. Generally the user can charge the battery of such types of vehicles by connecting an external power-supply cord to the plug equipped in the vehicle, for example, at home or at a specific spot for charging such electric-based vehicles in public places (e.g. public electric charging stations).

For the use as an electric power source of such electric-based vehicles, i.e. electrically drivable vehicles, for example, lithium ion batteries as well as a nickel hydrogen batteries are known, especially for purely electrically driven vehicles and so-called plug-in hybrid vehicles (also referred to as PHV or PHEV). It is know that such types of batteries have a limited lifetime with respect to chargeable cycles, and the lifetime can be affected by how the battery is maintained. For example, if a chargeable battery is kept in a highly charged state for a long time, the lifetime of the battery will be deteriorated more than in the case of being kept in a less charged state. Since the battery is typically an expensive and important component determining the performance and convenience of the vehicle, it is essential to avoid deterioration of the battery for the user.

US 2011/0210698 A1 describes an in-vehicle apparatus for controlling a charging schedule of a battery of an electrically driven vehicle such that the time period in which the battery is kept in a fully-charged state is reduced. US 2011/0210698 A1 describes a learning operation according to which motor start times of past day operation cycles of the vehicle are stored as history data, and charging of the battery is controlled so as to be completed around the time when the user needs to operate the electric vehicle based on the learning operation. However, according to US 2011/0210698 A1, the battery is always charged up to a predefined power level referred to as fully charged state.

This makes it difficult to control the power management of the battery according to both, the operation needs of the user and avoiding deterioration of the battery lifetime. Especially, if the predefined power level is set high, there is a high risk to keep the battery in the highly charged state for a long time thereby decreasing the battery lifetime. Especially, when the user does not use the electrical vehicle often, the battery level is disadvantageously always kept in a highly charge state. On the other hand, if the predefined level is set to a low value, there is a risk of bringing inconvenience to the user due to an increased risk of battery shortage during operation of the electrically driven vehicle.

In view of the above, it is an object of the present invention to provide a method and an apparatus for controlling power management of a chargeable electric power source of an electrically driven vehicle which allows to improve the operation convenience for the user of the electrically driven vehicle and, at the same time, to avoid deterioration of the lifetime of the chargeable electric power source.

**Summary of the invention**

In view of the above-described objects of the present invention, an apparatus for controlling power level management of an electric power source of an electrically driven vehicle according to claim 1, a method for controlling power level management of an electric power source of an electrically driven vehicle according to claim 16, and a computer program product according to claim 17 are proposed. Dependent claims relate to preferred embodiments of the present invention.

According to a first aspect of the present invention, there is proposed an apparatus (or a system of a plurality of apparatuses) for controlling power level management of an electric power source of an electrically driven vehicle which is chargeable when being electrically connected to an electric charging unit for charging the electric power source.

According to an aspect of the invention, the apparatus/system comprises memory means configured for storing power consumption information history data indicating one or more power consumption amount values of the chargeable electric power source, each power consumption amount value being associated with a unit time period of one or more past unit time periods.

Here, power consumption values may relate to charging amounts and/or discharging amounts of the respective unit time periods. These can be given, for example, in absolute units such as e.g. in kWh or also in relation to a total capacity of the power source. These may be directly stored in the memory means and/or be determined based on raw data being stored in the memory means (e.g. relating to power switch on/off events, relating to plug/ unplug events for connecting/ disconnecting the chargeable power source to/ from an electric charging unit, and/or relating to charging/

2

discharging start and/or end times during past unit time periods) .

Most conveniently for typical users, a unit time period can be chosen as a day (i.e. 24 hours, preferably starting at a time which is typically prior to a first day's use of the electric vehicle), but the unit time periods can be chosen differently, e.g. as a week or also as parts of a day.

The apparatus/system further comprises processing means configured for determining a target power level of the chargeable electric power source for a present unit time period and/or a future unit time period (such as e.g. the next unit time period following the current unit time period) on the basis of the power consumption information history data stored in the memory means, and/or control means configured for controlling power level management of the chargeable electric power source on the basis of the target power level determined by the processing means, when the electric power source is electrically connected to the electric charging unit.

According to the invention as described above, a power management of the chargeable electric power source can be advantageously controlled based on a target power level, which is not pre-set to a pre-defined value as in the prior art, but which can be individually determined on the basis of power consumption information history data currently stored in the memory means, i.e. on the basis of history data indicating information about the user's past power consumption.

That is, the suitable target power level on which the power management is based can be advantageously determined on the basis of history data indicating a user's consumption of power during past unit periods so that it becomes possible to control power management of a chargeable electric power source of an electrically driven vehicle such as to allow to improve the operation convenience for the user of the electrically driven vehicle and, at the same time, to avoid deterioration of the lifetime of the chargeable electric power source because the target power level is determined based on user's power consumption history so as to avoid too high power level for avoiding lifetime deterioration of the power source as well as too low power level, thereby still allowing for user's convenience.

According to a preferred aspect of the present invention, each unit time period is preferably associated with one of a plurality of unit time period types. Preferably, the processing means is configured for determining a target power level of the chargeable electric power source for the present unit time period and/or the future unit time period on the basis of one or more power consumption amount values being associated with unit time periods of the same type as the present unit time period or the future unit time period.

Accordingly, the determination of the target power level can be further improved in that the types of unit periods are considered, taking into account the user's operation needs and operation patterns even more adequately. For example, in case the unit periods are representing days or parts of days, the types may indicate the type of day such as e.g. weekday, weekend and/or holiday. In case of a week as the unit time period, the types may indicate the type of week such as work week or a vacation week or the like.

According to a preferred aspect of the present invention, the processing means is configured for determining the target power level of the chargeable electric power source on the basis of a statistical evaluation of the one or more power consumption amount values indicated by the power consumption information history data. This allows to further improve the determination of the target power level based on the one or more power consumption amount values indicated by the power consumption information history data, thereby taking into account the user's operation needs and operation patterns even more adequately.

According to another preferred aspect of the present invention, the processing means is further configured for determining the target power level of the chargeable electric power source on the basis of a predetermined maximum target power level of the chargeable electric power source. According to another preferred aspect of the present invention, the processing means is further configured for determining the target power level of the chargeable electric power source on the basis of a predetermined minimum target power level of the chargeable electric power source.

Regarding the preferred aspect of determining the target power level of the chargeable electric power source on the basis of a statistical evaluation of the one or more power consumption amount values indicated by the power consumption information history data, there can be provided one or more of the further preferred aspects as described in the following.

Preferably, the processing means is configured for determining the target power level of the chargeable electric power source on the basis of a maximum value of the one or more power consumption amount values indicated by the power consumption information history data. This allows to further improve the determining the target power level by a simple method since it can be assumed that the maximum value of the one or more power consumption amount values indicated by the power consumption information history data represents a power level which can guarantee user's convenience for the present, next or future unit time periods.

Preferably, the processing means is configured for determining the target power level of the chargeable electric power source on the basis of an average value of the one or more power consumption amount values indicated by the power consumption information history data. Preferably, the processing means is configured for determining the target power level of the chargeable electric power source on the further basis of a standard deviation value determined on the basis of the one or more power consumption amount values indicated by the power consumption information history data. Especially by taking into account both, the average value of the one or more power consumption amount values and the standard deviation thereof, in the determination of the target power level, user's convenience for the present, next or future unit time period can be provided based on a simple but reliable statistical evaluation.

Further preferably, the processing means is configured for determining the target power level of the chargeable electric power source on the further basis of an additional contribution value being determined independently from the one or more power consumption amount values indicated by the power consumption information history data. That is, in addition to statistical considerations, an additional contribution value can be conveniently considered for improving user's convenience for the present, next or future unit time period.

Further preferably, the additional contribution value is a constant value, a value determined according to a function of a maximum value, a minimum value, an average value, and/or a standard deviation of the one or more power consumption amount values indicated by the power consumption information history data, or a value determined according to a function of a number of power consumption amount values indicated by the power consumption information history data, wherein the additional contribution value preferably decreases with increasing number of power consumption amount values indicated by the power consumption information history data. In case the additional contribution value decreases with increasing number of power consumption amount values indicated by the power consumption information history data, a reliability of the statistical evaluation can be taken into account because the reliability of the statistical evaluation increases with the number of samples.

Preferably, the control means is configured for controlling power level management of the chargeable electric power source by controlling charging of the chargeable electric power source when being electrically connected to the electric charging unit for charging the electric power source on the basis of the target power level determined by the processing means and/or discharging of the chargeable electric power source when being electrically connected to an electric charging unit for discharging the electric power source on the basis of the target power level determined by the processing means. This has the advantage that power management can be based on the target power level for charging as well as discharging of the power source and also discharging of the power source can be controlled such as to avoid lifetime deterioration of the power source.

According to a preferred aspect of the present invention, the power level determining means configured for determining a current power level of the chargeable electric power source. This allows to additionally control power management of the power source on the basis of the present power status, making it possible to determine based on the comparison with the determined target power level whether charging and/or discharging may be necessary and/or allowable based on the current power level of the chargeable electric power source.

In particular, further preferably, the processing means is configured for determining a required charging amount on the basis of a difference between the determined target power level of the chargeable electric power source for a present unit time period and/or future unit time period and the current power level of the chargeable electric power source determined by the power level determining means. Further preferably, the control means is configured to control power level management of the chargeable electric power source by controlling charging and/or discharging of the chargeable electric power source on the basis of the required charging amount determined by the processing means. Accordingly, it is advantageously possible to control power management of the chargeable electric power source on the basis of a suitably determined required charging amount determined on the basis of the determined target power level.

Further preferably, the control means is configured to control power management of the chargeable electric power source further on the basis of a target charging completed time and on the basis of the condition that the power level of the electric power source at the target charging completed time corresponds to the target power level determined by the processing means, when the electric power source is electrically connected to the electric charging unit. This allows to control the charging and/or discharging of the electric power source such that the target power level can be reached at a target charging completed time.

Further preferably, the processing means is configured for determining the target charging completed time for the present and/or future unit time period on the basis of a statistical evaluation of unplug time information history data indicating one or more unplug time values of the chargeable electric power source, each unplug time value preferably indicating a past timing of disconnecting the electric power source from the electric charging unit and each unplug time value being preferably associated with a unit time period of the one or more past unit time periods. This provides the further advantage that also the target charging completed time, in addition to the target power level, can be accurately determined based on a statistical evaluation of past unit time periods, thereby reflecting past user's consumption patterns.

Further preferably, the processing means is further configured for determining an achievable charging amount based on a present time, the target charging completed time, a start time of a first charging period, an end time of the first charging period and/or a charging rate during the first charging period. Further preferably, the achievable charging amount is determined as the product of the charging rate and the time difference between a first time and a second time. The first time may be one of the target charging completed time and the end time of the first charging period or the first time may preferably be the earlier time of the target charging completed time and the end time of the first charging period. The second time may be one of the present time and the start time of a first charging period or the second time may preferably be the later time of the present time and the start time of a first charging period.

This allows to control power management such as to schedule a charging procedure during a first charging period which may be a charging period having a lower electricity cost so that the power management can be controlled much more cost effective in that an achievable charging amount during the first charging period (e.g. a low cost charging period) can be advantageously considered.

Further preferably, the control means is configured to compare the achievable charging amount and the required charging amount. Further preferably, if the achievable charging amount is determined to be smaller or equal to the required charging amount, the control means may be configured to initiate controlling charging of the chargeable electric power source, and/or, if the achievable charging amount is determined to be larger than the required charging amount, the control means may be configured to initiate controlling discharging of the chargeable electric power source.

Further preferably, the processing means is further configured for determining an allowed discharging amount on the basis of the achievable charging amount and the required charging amount, in particular preferably on the basis of the difference between the achievable charging amount and the required charging amount. Further preferably, the control means is configured to control discharging of the chargeable electric power source on the basis of the allowed discharging amount.

Accordingly, still providing a cost effective charging in case the first charging period is a low cost charging period, it is possible to control discharging of the power source on the basis of considerations of an achievable charging amount during the first charging period such as e.g. the low cost charging period.

Further preferably, the processing means is configured to determine the allowed discharging amount as the minimum value of the difference between the achievable charging amount and the required charging amount and/or a discharge amount limit. This makes it possible by a simple method to additionally control discharging of the power source on the basis of a discharge amount limit so that an increased number of charging/discharging cycles can be avoided so that this additionally helps to avoid lifetime deterioration of the power source by an improved discharging control.

Further preferably, the discharge amount limit is pre-set by a user or determined on the basis of a battery cycle limit taking into account a theoretical maximum number of battery cycles of the chargeable electric power source, a total number of used battery cycles of the chargeable electric power source, and/or an intended period of use of the chargeable electric power source. Accordingly, this has the advantage that the discharge amount limit for the control of discharging of the power source can additionally and conveniently for the user to take into account a dynamically determined battery cycle limit which considers a theoretical maximum number of battery cycles of the chargeable electric power source and an intended period of use of the chargeable electric power source (or the vehicle) in the control of the discharging so as to improve avoiding lifetime deterioration based on user's preferences and/or user's consumption patterns.

According to preferred aspects of the present invention, the apparatus is mounted to the electrically driven vehicle, the apparatus is connectable to a control device of the electrically driven vehicle, the apparatus is mounted to the electric charging unit, the apparatus is connectable to a control device of the electric charging unit, and/or the apparatus is a server system comprising one or more server computers, the server system being connectable to control devices of one or more electric charging units and/or connectable to control devices of one or more electrically driven vehicles. A server system can be, for example, a Telematics center's server system.

Also, the system according to the invention may comprise one or more apparatuses being mounted to the electrically driven vehicle, apparatuses being connectable to a control device of the electrically driven vehicle, apparatuses being mounted to the electric charging unit, apparatuses being connectable to a control device of the electric charging unit, and/or a server system comprising one or more server computers, the server system being connectable to control devices of one or more electric charging units and/or connectable to control devices of one or more electrically driven vehicles.

According to a second aspect of the present invention, there is proposed a method for controlling power level management of an electric power source of an electrically driven vehicle which is chargeable when being electrically connected to an electric charging unit for charging the electric power source. The method comprises storing power consumption information history data indicating one or more power consumption amount values of the chargeable electric power source, each power consumption amount value being associated with a unit time period of one or more past unit time periods, determining a target power level of the chargeable electric power source for a present unit time period or a future unit time period on the basis of the power consumption information history data stored in the memory means, and controlling power level management of the chargeable electric power source on the basis of the target power level determined by the processing means, when the electric power source is electrically connected to the electric charging unit.

For advantages of the above method and the preferred aspects thereof as described thereof, please refer to the above description of advantages of the corresponding apparatus features.

According to a preferred aspect of the present invention, each unit time period is associated with one of a plurality of unit time period types, and the method may further comprise determining a target power level of the chargeable electric power source for the present unit time period or the future unit time period on the basis of one or more power consumption amount values being associated with unit time periods of the same type as the present unit time period or the future unit time period.

According to a preferred aspect of the present invention, the method may further comprise determining the target power level of the chargeable electric power source on the basis of a statistical evaluation of the one or more power consumption amount values indicated by the power consumption information history data.

According to a preferred aspect of the present invention, the method may further comprise determining the target power level of the chargeable electric power source on the basis of a predetermined maximum target power level of the chargeable electric power source.

According to a preferred aspect of the present invention, the method may further comprise determining the target power level of the chargeable electric power source on the basis of a predetermined minimum target power level of the chargeable electric power source.

According to a preferred aspect of the present invention, the method may further comprise determining the target power level of the chargeable electric power source on the basis of a maximum value of the one or more power consumption amount values indicated by the power consumption information history data.

According to a preferred aspect of the present invention, the method may further comprise determining the target power level of the chargeable electric power source on the basis of an average value of the one or more power consumption amount values indicated by the power consumption information history data.

According to a preferred aspect of the present invention, the method may further comprise determining the target power level of the chargeable electric power source on the basis of a standard deviation value determined on the basis of the one or more power consumption amount values indicated by the power consumption information history data.

According to a preferred aspect of the present invention, the method may further comprise determining the target power level of the chargeable electric power source on the further basis of an additional contribution value being determined independently from the one or more power consumption amount values indicated by the power consumption information history data, wherein the additional contribution value may be a constant value, a value determined according to a function of a maximum value, a minimum value, an average value, and/or a standard deviation of the one or more power consumption amount values indicated by the power consumption information history data, or a value determined according to a function of a number of power consumption amount values indicated by the power consumption information history data, wherein the additional contribution value decreases with increasing number of power consumption amount values indicated by the power consumption information history data.

According to a preferred aspect of the present invention, the method may further comprise controlling power level management of the chargeable electric power source by controlling charging of the chargeable electric power source when being electrically connected to the electric charging unit for charging the electric power source on the basis of the target power level determined by the processing means and/or discharging of the chargeable electric power source when being electrically connected to an electric charging unit for discharging the electric power source on the basis of the target power level determined by the processing means.

According to a preferred aspect of the present invention, the method may further comprise determining a required charging amount on the basis of a difference between the determined target power level of the chargeable electric power source for a present unit time period and/or future unit time period and a current power level of the chargeable electric power source.

According to a preferred aspect of the present invention, the method may further comprise controlling power level management of the chargeable electric power source by controlling charging and/or discharging of the chargeable electric power source on the basis of the required charging amount.

According to a preferred aspect of the present invention, the method may further comprise controlling power management of the chargeable electric power source further on the basis of a target charging completed time and on the basis of the condition that the power level of the electric power source at the target charging completed time corresponds to the target power level, when the electric power source is electrically connected to the electric charging unit.

According to a preferred aspect of the present invention, the method may further comprise determining the target charging completed time for the present or future unit time period on the basis of a statistical evaluation of unplug time information history data indicating one or more unplug time values of the chargeable electric power source, each unplug time value preferably indicating a past timing of disconnecting the electric power source from the electric charging unit and each unplug time value being preferably associated with a unit time period of the one or more past unit time periods.

According to a preferred aspect of the present invention, the method may further comprise determining an achievable charging amount based on a present time, the target charging completed time, a start time of a first charging period, an end time of the first charging period and/or a charging rate during the first charging period, wherein the achievable charging amount is determined as the product of the charging rate and the time difference between a first time and a second time, the first time being one of or the earlier time of the target charging completed time and the end time of the first charging period and the second time being one of or the later time of the present time and the start time of a first charging period.

According to a preferred aspect of the present invention, the method may further comprise controlling comparing the achievable charging amount and the required charging amount, wherein, if the achievable charging amount is determined to be smaller or equal to the required charging amount, the method preferably further comprises initiating controlling charging of the chargeable electric power source, and/or, if the achievable charging amount is determined to be larger than the required charging amount, the method preferably further comprises initiating controlling discharging of the chargeable electric power source.

According to a preferred aspect of the present invention, the method preferably further comprises determining an allowed discharging amount on the basis of the achievable charging amount and the required charging amount, in particular on the basis of the difference between the achievable charging amount and the required charging amount, wherein discharging of the chargeable electric power source is preferably controlled on the basis of the allowed discharging amount.

Preferably, the allowed discharging amount is determined as a discharge amount limit, as the difference between the achievable charging amount and the required charging amount or as the minimum value of the difference between the achievable charging amount and the required charging amount and the discharge amount limit.

Further preferably, the discharge amount limit is pre-set by a user or determined on the basis of a battery cycle limit taking into account a theoretical maximum number of battery cycles of the chargeable electric power source, a total number of used battery cycles of the chargeable electric power source, and/or an intended period of use of the chargeable electric power source.

According to a third aspect of the present invention, there is proposed a computer program product comprising computer program means for causing a computer, which is connectable to a control device of an electrically driven vehicle and/or an electric charging unit for charging an electric power source of the electrically driven vehicle, to execute the steps of the method according to one or more of the above-described aspects.

Generally, the invention may relate to an apparatus for controlling charging/ discharging of a vehicle battery, which is equipped in an electric- based vehicle, wherein the apparatus monitors and records battery events, such as electricity plug- in/off events, charging initialization/ finalization events and/or discharging initialization/ finalization events. The apparatus may calculate statistics of daily battery usage by using the set of the recorded battery events. Based on the statistics data, the apparatus may estimate a required battery charge level for the next unit period cycle such as, e.g. the next day cycle, by taking into account driving usage and/or discharging to the energy system, and then charge the vehicle battery up to the estimated level. By doing so, compared to the prior art, the vehicle battery can be maintained at the lower charge level which satisfies a user demand for the vehicle usage including driving and/or discharging to an energy system and, accordingly, the battery lifetime can be advantageously prolonged without bringing inconveniences to the user.

Summarizing the above, the present invention allows to provide a method and an apparatus for controlling power management of a chargeable electric power source of an electrically driven vehicle which allows to improve the operation convenience for the user of the electrically driven vehicle and, at the same time, to avoid deterioration of the lifetime of the chargeable electric power source.

**Brief description of figures**

| | |
|---|---|
| **Fig. 1** | exemplarily and schematically shows a general overview of a battery control unit 100 according to a first embodiment of the present invention. |
| **Fig. 2** | shows an example of charging point data. |
| **Fig. 3** | shows an example of the user calendar data. |
| **Fig. 4** | shows an example of the battery history data. |
| **Fig. 5** | shows an example of the battery usage statistics data. |
| **Figs. 6A, 6B** | exemplarily illustrate a flowchart of a main process performed at the battery charge control unit 100. |
| **Fig. 7** | exemplarily shows a flowchart of a required battery level calculation process. |
| **Fig. 8** | shows an example of a flowchart of a charging/discharging plan calculation process. |
| **Fig. 9** | shows an example of a flowchart of a process when receiving a power switch event. |
| **Fig. 10** | shows an example of a flowchart of the process when receiving a timer event or a user operation event. |
| **Fig. 11** | exemplarily and schematically shows a general overview of the system architecture of a power level control system according to a second embodiment of the present invention. |
| **Fig. 12** | exemplarily shows a part of the flowchart of the main process at a battery control unit according to the second embodiment. |
| **Fig. 13** | exemplarily shows a flowchart of a process at the user operation unit according to the second embodiment. |

**Detailed description of figures and of preferred embodiments**

Preferred embodiments of the present invention will be described below with reference to the accompanying figures. The described features and aspects of the embodiments may be modified or combined to form further embodiments of the present invention.

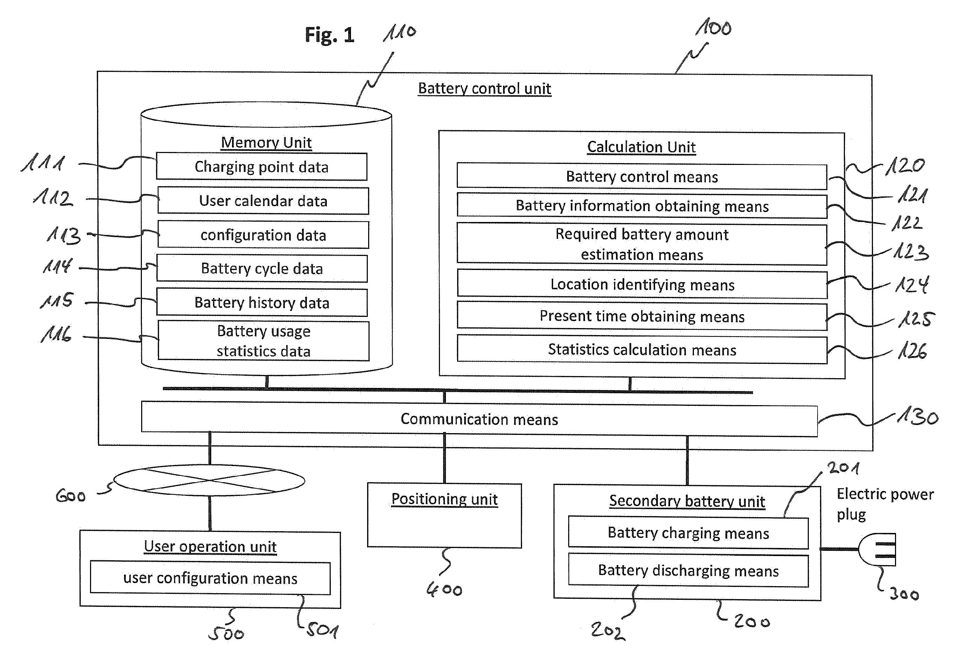

**Fig. 1** exemplarily and schematically shows a general overview of a battery control unit 100 according to a first embodiment of the present invention. The battery control unit 100 is preferably configured to be mounted on an electric-based vehicle such as an electric vehicle (EV) or a plug-in hybrid electric vehicle (PHEV) comprising a chargeable electric power source such as e.g. a chargeable battery or a system of a plurality of chargeable batteries. The battery control unit 100 according to the first embodiment exemplarily comprises a calculation unit 120 configured to process data (such as e.g. a processing unit which may comprise one or more CPUs), a memory unit 110 configured to store data indicating information, and a communication means 130.

The communication means 130 enables the battery control unit 100 to communicate through certain connected networks such as e.g. in-vehicle networks (e.g. a controller area network referred to as CAN) with other devices or systems, such as e.g. a secondary battery unit 200, a positioning unit 400 and/or a user operation unit 500 which allows the user to configure the settings of the battery control unit (100).

The user operation unit 100 may be rendered as a device or a set of devices equipped or non-equipped in the vehicle (i.e. comprising one or more devices mounted to the vehicle and/or one/or more connectable independent devices), which may be directly or indirectly be enabled to exchange data with the battery control unit 100 through one or more connection networks such as e.g. communication network 600.

Such networks may be rendered indirectly or directly, via wired connections such as e.g. internal bus-type connections, LAN, Ethernet, serial communication modules and/or PLC (power line communication), and/or via wireless connections such as, e.g. Bluetooth, cellular communication connections and/or Wi-Fi (WLAN) or any combination of the preceding examples. The user operation unit 500 may, for example, comprise a mobile phone, a tablet computer, a navigation device, a server, a system comprising a set of units (e.g. a Telematics center system) and so forth.

In the memory unit 110, charging point data 111, user calendar data 112, configuration data 113, battery cycle data 114, battery history data 115 and/or battery usage statistics data 116 can be stored.

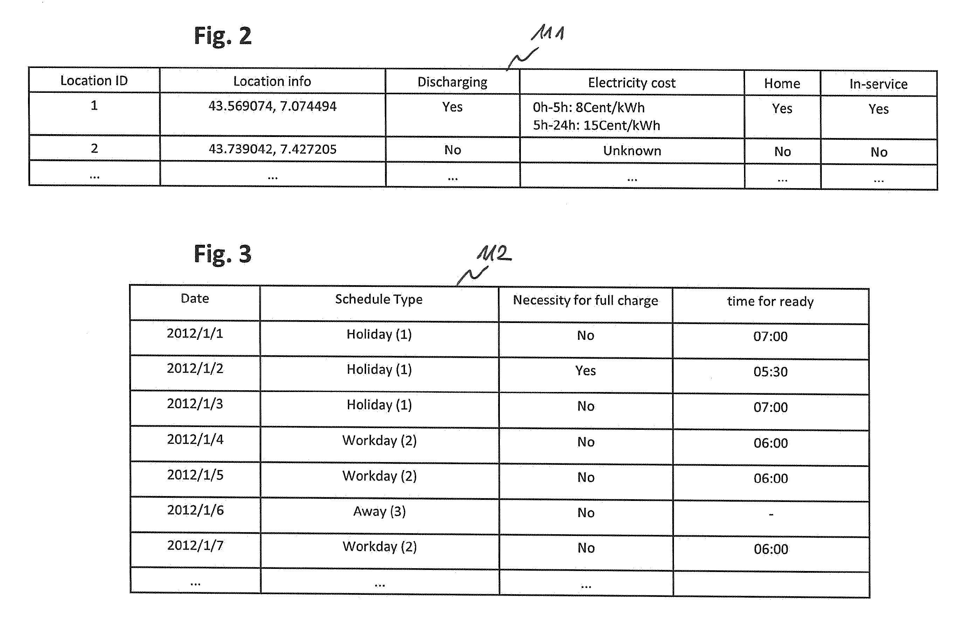

**Fig. 2** shows an example of the charging point data 111 exemplarily in the form of a list. The charging point data 111 indicates data relating to one or more charging points (such as e.g. one or more charging stations, also referred to as electric charging units) which can be used for charging and/or discharging the electric power source of the electrically driven vehicle. The charging point data 111 may include data indicating charging point information comprising one or more of a location ID, location information, discharging capability, electricity cost information, a home flag, an in-service flag and so forth.

The location ID may represent a unique identifier which uniquely identifies a charging point such as e.g. a public charging station or the home charging unit of the user. The location ID may be assigned automatically or manually, when the charging location is registered, e.g. when the charging point is used for the first time for charging and/or discharging of the electric power source of the vehicle. The location information indicates a location of the respective charging point identified by a location identifying means 124 of the calculation unit 124 of the battery control unit 100. For example, it may be a geographical position (e.g. longitude and latitude) indicating exactly or at least approximately the location of the respective charging point, e.g. as provided by the positioning unit 400 in Fig. 1.

The discharging capability indicates whether the respective charging point supports a discharging protocol of the vehicle or not, i.e. whether the charging point enables discharging of the electric power source of the vehicle. The electricity cost information indicates a unit cost of electric power of the respective charging point and may depend on the time of a day, e.g. the hours of a day may be divided into a plurality of charging periods having different electricity costs.

The home flag indicates if the respective charging point is a base place which is typically often used by the user for parking and charging and/or discharging, for example, a charging point located at the home of the user. If the home flag is not set, the charging point is located outside (e.g., a public charging station or at the workplace of the user).

The in-service flag indicates whether the respective charging point allows/enables power management control or not.

A charging point data entry for a charging point such as a list entry in Fig. 2 may be added automatically, e.g. once the battery control unit 100 detects for the first time a new location of a charging point (e.g. when the charging point is used for the first time to charge and/or discharge the electric power source), or it may be added manually by the user through the user operation unit 500.

When using a geographical position to identify the charging point, slight difference of the values in longitude and/or in latitude may be ignored, because the position determination e.g. by means of a satellite positioning system may involve measurement errors and also because a charging point such as e.g. a public charging station may comprise plural independent charging units which are located slightly off with respect to each other. For these reasons, it may be assumed that it does not lead to a significant impact to regard two positions as the same position, if those two positions are close to each other (such as e.g. the different positions of charging units of one same public charging station). For example, if the distance between the two positions is determined to be less than a certain threshold, they may be regarded as the same charging point.

The electricity cost information may be set automatically once the battery control unit 100 obtains it through communication with a communication device of the respective charging point or through communication via the internet, or may be configured manually by the user through the user operation unit 500. The in-service flag may be set by the user through the user operation unit 500.

**Fig. 3** shows an example of the user calendar data 112 exemplarily in the form of a list. The user calendar data indicates information on past unit time periods in the sense of the present invention, wherein the unit time period according to the embodiment is assigned as days, one day representing a unit time period. The user calendar data 112 may include a list of daily setting information comprising a date, a schedule type, a full charge flag, a time-for-ready (representing an example of a target charging completed time) and so on. The schedule type indicates the type of day. Here, according to an example, past unit time periods (past days according to the embodiment) are classified according to the type of the day e.g. as weekdays or days of weekends/holidays based on a calendar data of the user location (e.g. including national holidays the home country of the user and/or local holidays of an area of the user's home).

The user calendar data 112 may be also enhanced by reflecting user-setting data configured by the user through the user operation unit 500. For example, as exemplarily shown in Fig. 3, the user may reflect his/her workdays and holidays on the basis of the normal calendar, and may be able to specify days in which the user is away from home (e.g. intended trips of the user during which the vehicle is not used).

The full charge flag indicates whether a full charge (e.g. up to a pre-defined power level or the maximum power level) of the power source of the electric vehicle is required or not. The time-for-ready (target charging completed time) indicates a time at which the power source shall be ready and power management shall be finished so that the electric vehicle is ready for user's operation without the requirement of further charging and/or discharging the power source.

For each schedule type of the user calendar data 112, there may be set a default profile defining the full charge flag and the time-for-ready. Such profiles may, for example, be defined by the user as static configuration through the user operation unit 500, or may be automatically selected by the battery control unit 100 based on the statistics data of user operation hours for each schedule type. In addition to that, the user may be able to explicitly specify the necessity of full charge and the time-for-ready of a specific date, especially when the user has a plan of long distance trip on that day.

The configuration data 113 in Fig. 1 may include a set of one or more static parameters, a set of user specific configuration information configurable through the user operation unit 500, and so on, which may be required for calculations by the calculation unit 120. For example, the configuration data 113 may include data indicating a start time of a day cycle (unit period cycle) for each schedule type (e.g., 07:00), a maximum power level (e.g. Pmax) to which the power source is allowed to be charged, a minimum power level (e.g. Pmin) to which the power source is allowed to be discharged, and so forth.

The battery cycle data 114 in Fig. 1 may contain data indicating a theoretical lifetime of the battery (e.g. expressed as a total number of power source cycles), a power source cycle limit which indicates the number of battery cycles allowed by the user to be consumed during a pre-set time period (e.g. within a day, within a month, within one week etc.), average power source cycle data which indicates the number of average power source cycles consumed during a pre-set time period (e.g. within a day, within a month, within one week etc.) for each power source usage type (e.g. user operation and/or discharging), used power source cycle data which indicates the numbers of power source cycles consumed so far, e.g. since a pre-set date or during the current pre-set time period for each power source usage type, and/or total used power source cycle data which indicates the number of power source cycles accumulatively used since a pre-set date, since the beginning of the current pre-set time period for each power source usage type, and so on. Here, the unit of a power source cycle may be expressed, for example, in units of the capacity of the power source so that, for example, charging the power source from 25% to 75% may be represent half a cycle and, for example, also discharging the power source from 75% to 25% may be represent half a cycle etc.

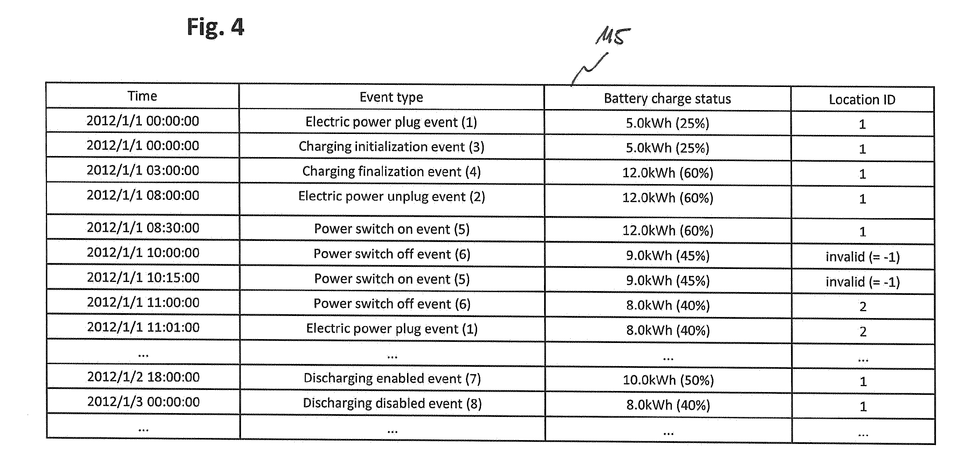

The battery history data 115 may include data indicating a history of events and status related to the power source in the past such as in a past period of time. Fig. 4 shows an example of the battery history data 115 exemplarily in the form of a list. The battery history data 115 may include a list of events and status information, exemplarily comprising a time when an event occurs, an event type indicating a type of the event, a battery charge status indicating remaining electric power level in the power source (e.g. in units of kWh and/or in relative units compared to the maximum power capacity of the power source), and/or a location ID indicating the location of the charging point or the parking place where the operation was done.

Types of events may contain events such an electric power plug/unplug event which happens when the electric power plug 300 is plugged in or out at a charging point, a charging initialization/finalization event which happens when the charging of the power source at a charging point starts or ends, a power switch on/off event which happens when the vehicle is switched on and off, a discharging enabled/disabled event which happens when discharging to the connected energy system is enabled or disabled, and so on. The battery control unit 100 is configured to detect such events, for example, by receiving corresponding information through the communication means 130 (e.g. an in-vehicle network).

The event information entries of the battery history data 115 can be used for calculating basic data for statistics. For example, daily power source consumption by user operation (e.g. used for driving) can be calculated by the calculation unit 120 by summing up the battery charge status difference between a pair of power switch on and off event happening on the target unit period cycle such as a day cycle. In the same way, power source charging per unit period (e.g. on one day) can be calculated based on one or more pairs of charging initialization and finalization events, and power source discharging per unit period to the energy system can be calculated based on one or more pairs of discharging enabled and disabled events, and so on.

By using the time of the events, it is also possible to calculate the operation hours and duration. The location ID allows to collect suitable statistics data depending on the location, e.g. depending on the particular charging point. Basically the user operation patterns may be different depending on the charging point (e.g. at home, at the workplace, or at public charging stations). By including the location ID in the battery history data 115, each data entry can be classified with respect to the relevant location. The location ID of the event can identified by the location identifying means 124. If no corresponding location ID can be identified, a specific value indicating an invalid ID can be put in the event information entry (e.g. "invalid"). In this example, only raw event history data is stored as shown in Fig. 4, but the battery history data may include further calculated information additionally or instead of the raw event history data. Moreover, for reducing memory consumption, the data may be keep stored information only during a limited period of time upon entry.

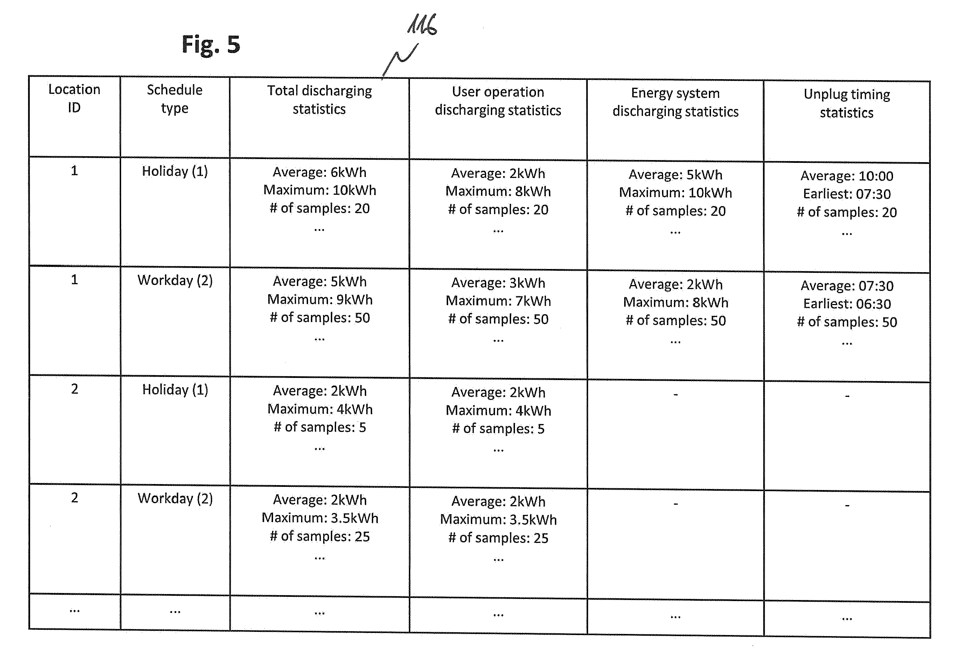

The battery usage statistics data 116 contains statistics data calculated based on the battery history data 115. Fig. 5 shows an example of the battery usage statistics data 116 exemplarily in the form of a list. The battery usage statistics data 116 may include a list of a location ID, a schedule type, a set of total discharging statistics, a set of user operation discharging statistics (e.g. discharging due to driving), a set of energy system discharging statistics (e.g. discharging due to discharging to an energy system), unplug timing statistics relating to the timing of unplug events, and so on. As mentioned above, since the user operation patterns and the energy system demand patterns may be dependent on the charging point as well as the type of the unit time period such as the type of day, statistics data may be calculated separately for each set of location ID and schedule type such as exemplarily shown in Fig. 5.

The total discharging statistics in Fig. 5 exemplarily represent statistics data on total battery consumption on a daily basis (i.e., discharging) containing both aspects of user operation (i.e., driving) and discharging to the energy system, while the user operation discharging statistics and the energy system discharging statistics represent for each aspect respectively. When the home flag is not set for a certain charging point, instead of daily battery consumption, the statistics data may be based on the power source consumption during the time of leaving the charging point till reaching the charging point for which the home flag is set.

The unplug timing statistics may represent statistics data on the timing at which the electric power plug was unplugged, e.g. particularly around the beginning of day. It may be also possible to only focus on the data around the predefined start time of a day cycle, in order to remove irrelevant data from the statistics. This may applied only to the charging point in which the home flag is set.

Each statistics data entry may basically include one or more of an average value, a maximum value, a number of samples, an unbiased variance value of the samples, a standard deviation value of the samples, and so on. Such statistics values can be calculated by the statistics calculation means 126 of the calculation unit 120, e.g. by using the battery history data 115 and/or secondary data calculated from the history data.

For example, the calculation unit 120 comprises battery control means 121, battery information obtaining means 122, required battery amount estimation means 123, location identifying means 124, present time obtaining means 125 and statistics calculation means 126.

The battery control means 121 is configured to control charging and/or discharging of the secondary battery unit 200 through the communication means 130. The secondary battery unit 200 has a battery charging means 201 to charge electric power, coming from a power source outside the vehicle connected to the secondary battery unit 200, into the power source of the vehicle, and a battery discharging means 202 to provide electric power stored in the power source to the electric devices in the vehicle such as ECUs (Electronic Control Unit), and/or to the energy system externally connected to the secondary battery unit 200 via an electric power plug 300 (e.g. at a charging point). For example, the battery control means 120 may sends data and/or commands to the secondary battery unit 200 through the communication means 130 (e.g. through an in-vehicle communication network such as CAN), and the secondary battery unit 200 controls operation of charging and/or discharging of the power source of the vehicle accordingly.

The battery information obtaining means 122 is configured to obtain information of the power source, for example, relating to a power source charge level (power level), a power source capacity, a power source type, and parameters relating to the operation of the power source such as temperature and so on. This can be realized, for example, in that the battery information obtaining means 122 sends data indicating a request for battery information to the secondary battery unit 200 through the communication means 130, and the secondary battery unit 200 replies back the corresponding information upon receipt of the request. According to alternative embodiments or also in addition to the above, it is further possible that the corresponding information is automatically regularly, or even periodically, sent to the secondary battery unit 200 without waiting for a corresponding request.

The required battery amount estimation means 122 is configured to estimate a battery amount to be required for an expected user operation and/or discharging to the energy system for the next day cycle (embodying a next or future unit time period in the sense of the present invention). The calculation can be based on a statistical evaluation such as on the basis of the battery usage statistics data 116. For example, the required battery amount may be determined by (maximum value + C), where C may be a pre-set default value. Another example is to use the standard deviation by using the formula {average value + k * standard deviation} where k may be a certain pre-set value (e.g., k=2). By using such statistics data, it becomes possible to estimate the required battery amount more accurately according to the user specific patterns.

The location identifying means 124 is configured to identify the location of the charging point or the place where the vehicle is parked. More specifically, the location identifying means 124 is configured to identify the corresponding charging point entry from the charging point data 111 stored in the memory unit 110. For example, the location identifying means 124 may use a geographical position for the identification based on a position obtained from the positioning unit 400 through the communication means 130. Here, the positioning unit 400 can be, for example, a satellite positioning system module which may determine a current location by means of a satellite positioning system such as e.g. GPS or GALILEO.

The location identifying means 124 may compare the obtained geographical position and a position indicated in a charging point entry of the charging point data 111, and if it can be determined that the two positions are close enough (e.g. in that distance between the two positions is below a certain threshold), the charging point can be identified based on the position determined by the positioning unit 400 and based on the charging point data 111. As another example, the location identifying means 124 may obtain a unique identifier indicating the connected energy system, in the procedure of a communication protocol for charging/discharging between the electric-based vehicle and the energy system of the charging point. In this case, the charging point can be identified by comparing a unique identifier received from the charging point with unique identifiers stored in the charging point data 111.

The present time obtaining means 125 is configured to obtain the present time, for example, from a real time clock (RTC) module equipped inside or outside the battery control unit 100.

The statistics calculation means 126 is configured to calculate statistics data from a number of data, specifically from the battery usage statistics data 116 and/or from the battery history data 115 stored in the memory unit 110. The battery control unit 100 may, for example, calculate the statistics regularly (e.g., daily), and store it in the battery usage statistics data 116 in the memory  unit 110.

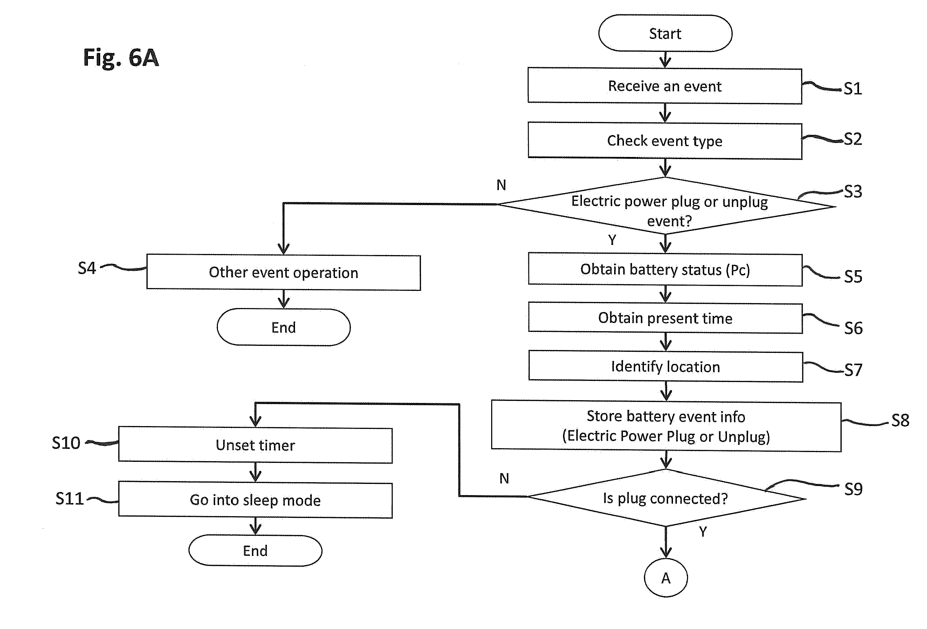

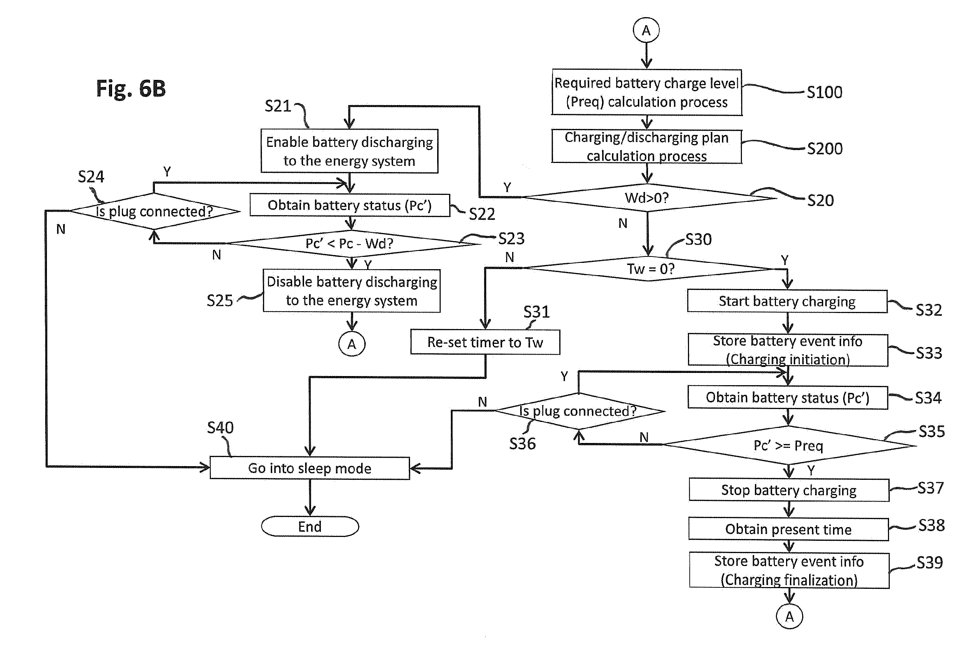

**Figs. 6A** and **6B** exemplarily illustrate a flowchart of a main process performed at the battery charge control unit 100. At the beginning of the main process, the battery charge control unit 100 is basically waiting (e.g. in a sleep mode) for receiving an indication of the occurrence of an event. When it receives an indication of the occurrence of an event in step S1, the battery control unit 100 checks the type of the occurred event (step S2).

It is to be noted that after step S2, the following operation differs depending on the event type which is determined in step S2. The flowchart of Fig. 6A exemplarily shows the case of reception of an indication of the occurrence of an electric power plug event (i.e. an event in which the power source is connected/plugged or disconnected/unplugged at the charging point/charging unit). If the event type is not related to the electric power plug or unplug event (step S3 results in No), the process goes to another operation dependent on the event type (step S4). Other event examples shall be discussed with reference to Figs. 9 and 10 below.

However, if the event is related to the electric power plug or unplug event (step S3 results in Yes), the battery charge control unit 100 determines a current battery status including a current power level Pc by means of the battery information obtaining means 122 (step S5) and the battery charge control unit 100 determines a present time by means of the present time obtaining means 125 (step S6) . Furthermore, the battery charge control unit 100 identifies the location of the respective charging point (i.e. the charging point at which the plug/ unplug event occurred) by means of the location identifying means 124 (step S7) . Here, the ordering of the steps S5 to S7 is not essential and the steps can be performed in any ordering or at the same time. Then, together with data indicating the event type, the determined data relating to the event including time and location is recorded to the battery history data 115 stored in the memory unit 110 (step S8) .

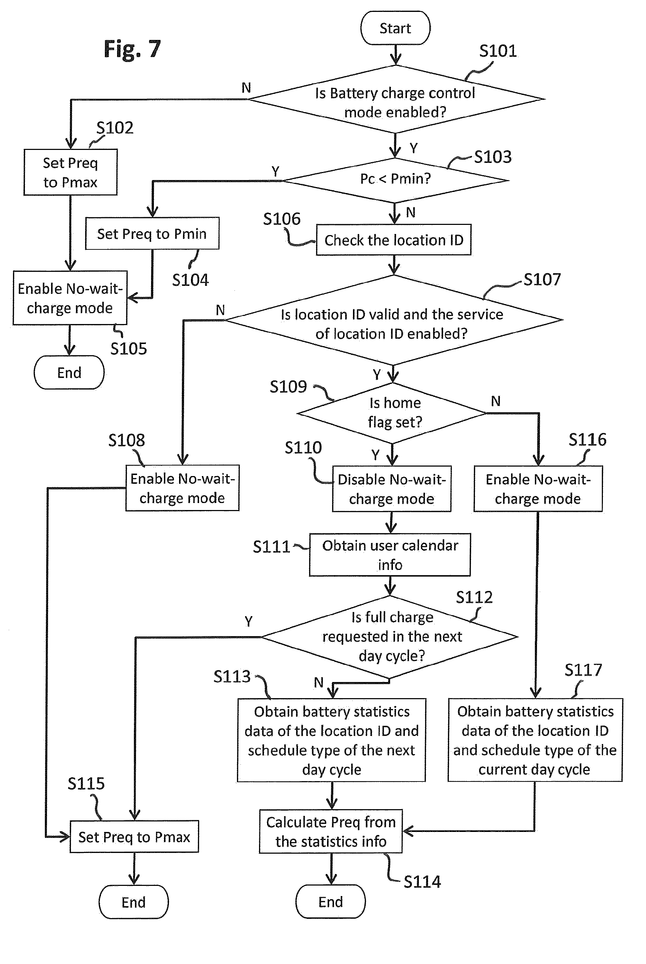

If the event type is an electric power unplug event (step S9, which checks whether the electric plug connection between the electric power source and the charging unit is connected, results in No), the battery charge control unit 100 cancels a waiting timer (step S10), goes back into the sleep mode (step S11) and ends this process. Otherwise, if the electric plug connection between the electric power source and the charging unit is connected by the plug event (step S9 results in Yes), the process continues with a required battery level calculation process (step S100) of determining a required battery level. This will be described in the following according to a detailed example process with reference to Fig. 7.

**Fig. 7** exemplarily shows a flowchart of a required battery level calculation process (as an example for step S100 in Fig. 6B). First this process checks in step S101 whether the battery charge  control mode is enabled or not (step S101), for example, based on the in-service flag of the charging point data 111. In addition, the battery charge control mode can be configured by the user through the user operation unit 500. For example, when the user indicates immediate charging from the user operation unit 500 (e.g., by pushing an immediate charging button deployed on the vehicle or the battery control unit 100), the battery charge control mode can be also temporarily disabled. Then, once the charging operation is accomplished or the electric power plug 300 is disconnected, the battery charge control mode may be automatically enabled again.

If the battery charge control mode is disabled (step S101 results in No), the required battery amount estimation means 123 sets the required power level Preq to a pre-defined maximum power level Pmax (step S102). The maximum power level Pmax can represent a maximally charged power source being charged up to the maximum capacity, or it may represent a pre-defined target maximum value (e.g. in units of kWh and/or relative to the power source capacity, e.g. to 80%). Then the battery control means 121 enables a no-wait-charge mode (step S105), indicating that charging can be initiated without waiting, and the process ends and goes back to the main process (from step S100 to step S200).

On the other hand, if the battery charge control mode is not disabled (step S101 results in Yes), the required battery amount estimation means 123 determines whether the current power level Pc of the power source as determined in step S5 is below a pre-defined minimum battery level Pmin (step S103). If step S103 results in yes, the required battery amount estimation means 123 ends the process after setting the required power level Preq to the value of the pre-defined minimum battery level Pmin (step S104) and, the battery control means 121 enables a no-wait-charge mode (step S105). By this operation, power level management of the power source is advantageously performed such that, if the current power level of the power source is below a certain level which is intended by the user to be always kept, the power source can be charged immediately up to the desired minimum power level Pmin.

If the current power level Pc is determined to be not less than the desired minimum power level Pmin (step S103 results in No), the process continues with checking the location ID identified during the step S7 (step S106). In step S107, it is further determined whether the location ID is valid and if battery control service is enabled. If the location ID is invalid and/or the battery control service is disabled (step S107 results in No), the battery control means 121 enables the no-wait-charge mode (step S108), and the required battery amount estimation means 123 sets the required power level Preq to the maximum power level Pmax (step S115), and ends the process. This means that if the location of the connected charging point may not be registered and/or does not provide the possibility of a battery charge control service, the power level management is performed such that charging is immediately initiated based on the maximum power level without charging amount control. This helps to advantageously avoid potential unexpected and inconvenient mischarging for the user.

On the other hand, in step S107, if the location ID is determined to be valid and the service of the location ID is determined to be enabled, the location identifying means 124 checks whether the home flag is set or not (step S109).

If the home flag is set (step S109 results in Yes), the battery control means 121 disables the no-wait-charge mode (step S110). Then, the required battery amount estimation means 123 obtains the user calendar info indicated by the user calendar data 112 (step S111) and checks if a full charge is being requested according to the user calendar data 112 in the next unit period cycle such as the next day cycle (step S112). If it is determined that a full charge is being requested (step S112 results in Yes), the required battery amount estimation means 123 sets the required power level Preq to the maximum power level Pmax (step S115) and ends the process.

On the other hand, if no full charge is being requested (step S112 results in No), the required battery amount estimation means 123 obtains battery usage statistics data of the location ID of the charging point and the schedule type of the next day cycle specified in the user calendar data (step S113).

After the step of S113, the required battery amount estimation means 123 calculates required power level Preq (target power level) based on the corresponding statistics information (step S114). For example, the required power level Preq may be calculated based on a statistical evaluation of the battery history data 115 and/or the battery usage statistics data 116.

According to a preferred embodiment, the required power level Preq (target power level) may be calculated in step S114 based on one of the following equations:

$$\text{Preq} = \{\text{average total discharge power amount}\} + \text{Creq, or}$$

$$\text{Preq} = \{\text{average total discharge power amount}\} +$$
$$+ k * \{\text{standard deviation of total discharge power amount}\} + \text{Creq,}$$

where {average total discharge power amount} indicates an average value of the total discharge power amount of the power source during past unit time periods, {standard deviation of total discharge power amount} indicates a standard deviation of the total discharge power amount of the power source during past unit time periods, k is a pre-determined value (e.g. k = 2) and Creq (additional contribution value) is an optionally used value which may be chosen as a constant value  or according to a function of the preceding terms and/or as a function of the number of data samples available. In particular, in order to improve the reliability of the evaluation, the value of Creq can be chosen according to a function which decreases with increasing number of available samples (when the reliability of the statistical evaluation may be lower) and increases with decreasing number of available samples (when the reliability of the statistical evaluation may be higher), especially, when the upper formula without using the standard deviation is used.

Also, when the number of samples in the history data for obtaining statistical information is too small to rely on the result, Preq may also set differently (e.g. to Pmax) in order to avoid risks of battery shortage. Instead of using statistics, Preq may also be set by using a user defined power level or amount to be configured through the user operation unit 500.

In the step of S109, if the home flag is not set, the battery control means 121 enables the no-wait-charge mode (step S116) and the required battery amount estimation means 123 obtains battery usage statistics data of the location ID of the charging point and the schedule type of the current day cycle (step S117) since this charging point is outside of the user's home (e.g. at a work place of the user, at a public charging station or at another home of another user).

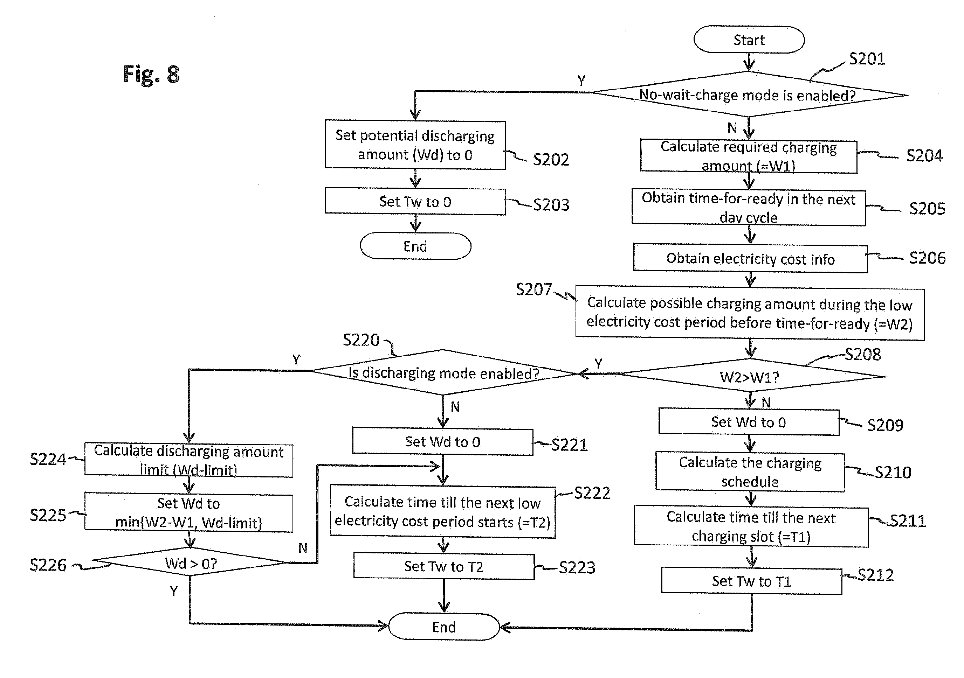

Once the required battery level calculation process S100 is done and the required power level is determined according to one of steps S102, S104, S115 or S114, the step S100 in Fig. 6B is completed and the main process goes to the next step of performing a charging and discharging plan calculation process S200. This will be described in the following according to a detailed example process with reference to Fig. 8.

**Fig. 8** shows an example of the flowchart of the charging and discharging plan calculation process S200. First, the battery control means 121 checks whether the no-wait-charge mode is enabled or not (step S201). If yes, the battery control means 121 sets an allowed discharging amount Wd to 0 (step S202) and sets a waiting time Tw to 0 (step S203). The allowed discharging amount Wd indicates a power amount which is allowed to be discharged from the power source to the energy system of the charging point and the waiting time Tw indicates a waiting time until beginning of the charging operation. Here, since the settings are Wd = 0 and Tw = 0, this means that no discharging is allowed and that no waiting until charging is allowed, thereby indicating that charging can be immediately initialized. Thereafter, the process goes back to the main process.

On the other hand, if the no-wait-charge mode is not enabled (step S201 results in No), the battery control means 121 calculates a required charging amount W1 based on the required power level Preq determined in the process of step S100 (step S204). Here, the required charging amount W1 can be, for example, calculated by one of the following equations:

$$W1 = Preq - Pc,$$

or

$$W1 = Preq - Pc + A,$$

where Pc is the current power level of the power source obtained in the step S5 and A may be a predetermined value which, for example, can reflect electric power consumption without user operation and/or discharging operation during the unit period cycle.

Then, the battery control means 121 obtains data indicating the intended time- for- ready for the next unit period cycle such as the next day cycle by referring to the user calendar data 112, the battery history data 115 and/or the battery usage statistics data 116 (step S205), and it further obtains the electricity cost information of the corresponding location ID by referring to the charging point data 111 (step S206) .

On the basis of the results of steps S204 to S206, the battery control means 121 calculates a possible charging amount W2 which is an electricity power amount that can be charged during a low electricity cost period (first charging time period) prior to the time-for-ready (target charging completed time) determined in step S205 (step S207). For example, if the low electricity cost period for charging the power source at a low charging cost rate is from 0:00 till 5:00 and the time-for-ready in the next day cycle is 6:00, 5 hours (i.e. between 0:00 and 5:00) can be advantageously used for charging at low cost. On the other hand, if the low electricity cost period for charging the power source at a low charging cost rate is from 1:00 till 7:00 and the time-for-ready in the next day cycle is 6:00, again 5 hours (i.e. between 1:00 and 6:00) can be advantageously used for charging at low cost.

In both of the above-described cases, the possible charging amount W2 can be determined according to the formula:

$$W2 = \{charging\ rate\ Rc\} \times 5h,$$

where the charging rate Rc is a rate indicating the electricity amount which is chargeable per a unit time when using the respective charging point, wherein Rc can be theoretically derived from the voltage and the current that the charging point provides, or it can be measured by using the charging event history available in the battery history data 115.

In general, the achievable charging amount W2 during a low cost period (first time period) can be determined as the product of the charging rate Rc and the time difference between a first time and a second time, the first time being the earlier time of the target charging completed time (determined time- for- ready) and the end time of the first charging period (low cost period) and the second time being the later time of the present time and the start time of a first charging period (low cost period) .

In the next step S208, the battery control means 121 compares the required charging amount W1 determined in step S204 and the possible/achievable charging amount W2 determined in step S207. Basically, for daily use, discharging to the energy system of the respective charging point can be beneficial when the electricity cost during charging is lower than the electricity cost that would occur during discharging. So, as a simple example for an advantageous discharging policy, discharging may be allowed as long as the required charging for the next unit period cycle such as the next day cycle can be achieved during the low electricity cost period, i.e. as long as W2 > W1.

In step S209, if it is determined that the possible/ achievable charging amount W2 is smaller or equal to the required charging amount W1 (W2 <= W1, step S208 results in No), the battery control means 121 sets the allowed discharging amount Wd to 0 in order to prevent discharging. After that, the battery control means 121 calculates a charging schedule (step S210) . For example, since W2 is the achievable/ possible charging amount during the low cost period (first time period), a required charging time period during a non- low- electricity- cost period (second time period) can be determined as follows:

$$Tch = \{W1 - W2\} / Rc$$

and, accordingly, the charging schedule in step S210 can be set such that charging start time may be set as being Tch earlier than the beginning of the low- electricity- cost period (first time period) . Alternatively, the time period Tch may be scheduled separately from the low- electricity cost period and/or divided into a plurality of separate charging periods. For example, if there are more than two levels of electricity cost during a day, the additional charging time period Tch may be scheduled in the period with the second lowest electricity cost prior to the time- for- ready in the next unit time period cycle such as the next day cycle. Accordingly, the charging schedule determined in step S210 may indicate one or more time slots for charging.

Based on the result of the determined charging schedule in the step S210, the battery control means 121 calculates a time period T1 until the next charging slot in the step of S211. For example, if the present time is 17:00 and the next charging slot starts from 22:00, T1 is set to the corresponding time difference between the beginning of the next charging slot and the present time, i.e. T1 = 5h in the above example. Then, in step S212, the battery control means 121 sets a waiting time Tw to T1 and goes back to the main process (continuing with step S20 in Fig. 6B).

On the other hand, in the step S208, if it is determined that the possible/achievable charging amount W2 is larger than the required charging amount W1 (i.e. W2 > W1, step S208 returns Yes), the process goes to the discharging capacity calculation steps (S220 to S226). Specifically, if the discharging mode is disabled in the user settings (step S220 returns No), the allowed discharge power amount Wd is set to 0 (step S221) and the timer is set such that the waiting time Tw is set to a time period T2 which can be the time period until the next low-cost charging period begins or a time period until a time at which the time period until the end of the low-cost charging period (or until the time-for ready, if earlier) is W1/Rc (steps S222 and S223).

On the other hand, if it is determined in step S220 that the discharge mode is enabled (step S220 returns Yes), the battery control means 121 first determines a discharging amount limit Wd-limit (step S224). The discharging amount limit can be determined on the basis of a pre-set or set value (e.g. a pre-set default value or a value manually set by the user via the user operation unit 500). Also, according to a preferred aspect, the discharging amount limit Wd-limit can be calculated as follows. In the battery cycle data 114, a power source cycle limit may be specified by the user as a policy according to user's preferences.

The underlying idea for a calculation of the discharging amount limit Wd-limit may be the aspect that if the user too often and/or too long makes use of the discharging functionality, there occurs an additional risk of shortening the battery lifetime due to a resulting increased number of battery cycles.

For example, if the user consumes one battery cycle per day, about 1800 battery cycles would be consumed within 5 years. However, if the theoretical maximum battery lifecycle is approximately 2000 battery cycles, the used number of battery cycles reaches the theoretical maximum battery lifecycle only after almost 5 years, which is shorter than a typically intended vehicle lifetime, and it may then be required to inconveniently replace the power source within the intended vehicle lifetime. In order to avoid such a situation, the present invention can be enhanced by an aspect which controls discharging by considering user defined policies for the battery usage. For example, if the user configures the desired period of vehicle use (e.g. 15 years), a battery cycle limit can be automatically calculated by the formula:

{unit period of the battery cycle limit} * [{the theoretical maximum number of battery cycles} – {the total number of used battery cycles up to the present time}] / [{the desired period of vehicle use} – {the total period of vehicle use up to the present time}],

wherein [{the theoretical maximum number of battery cycles} – {the total number of used battery cycles up to the present time}] indicates a number of expected remaining battery cycles and [{the desired period of vehicle use} – {the total period of vehicle use up to the present time}] indicates a remaining time period until the end of the desired period of vehicle use.

For example, if the remaining battery cycles are 1800, the remaining time period of vehicle use is 15 years, and the unit period of the battery cycle limit is 1 week, the battery cycle limit for a unit time period (here exemplarily 1 week) would be calculated as approximately 2.3 cycles ( 7days * 1800 cycles / (15 years * 365 days / year) ).

Based on the battery cycle limit, in the step S224, the discharging amount limit Wd-limit can be calculated by the following equation:

Wd-limit = ({battery cycle limit for a unit time period} — {the average battery cycles of user operation during a unit time period} — {the already used battery cycles of user operation and discharging during the current unit time period}) * {battery capacity}.

Then, in the next step S225, the battery control means 121 sets the allowed discharge amount Wd by taking the minimum between the difference W2- W1 and the determined Wd- limit. By restricting the discharging functionality by an additionally considered discharge amount limit Wd- limit, discharging of the power source is only performed when there is an electricity cost merit and the battery usage policies are satisfied at the same time, and, therefore, this provides the strong advantage of avoiding unexpected battery lifetime shortening while keeping the merit of the discharging functionality at the same time.

After determining the allowed discharging amount Wd in the step S225, if Wd > 0 (step S226 returns Yes), the process goes back to the main process (step S20). If not (i.e. if Wd <= 0, step S226 returns No), the process goes to the step S222 in the same way as when the discharging mode is disabled (coming from steps S220 and S221 as described above).

Returning now to the main process, once the process of step S200 is completed, the battery control means 121 checks the calculation result of the allowed discharging amount Wd and determines if the allowed discharging amount Wd is larger than 0 or if it is smaller or equal to 0 (step S20). If Wd > 0 (step S20 returns Yes), the battery control means 121 enables the battery discharging to the energy system (step S21). Then, the battery control means 121 starts to keep monitoring of the power source consumption during the discharging procedure (loop process of steps S22 of obtaining the battery status including the current power level Pc', S23 of determining whether the actual discharge amount has reached the allowed discharge amount Wd, and S24 of checking whether the plug is still connected), and when the actual discharging amount reaches the allowed discharge amount Wd (step S23 returns Yes), the battery control means 121 disables the battery discharging to the energy system (S25) and goes back to the step of S100 for recalculation in case the situation has changed. It is alternatively also possible not to recalculate steps S100 and S200 described above, by storing the calculated data (the parameters calculated in steps S100 and S200) in the memory unit 110.

On the other hand, if the battery control means 121 detects disconnection of the plug during the discharging monitoring loop of steps S22 to S24, it gets out of the loop (step S24 returns No) and goes to the sleep mode (S40).

In the step of S20, if Wd <= 0 (step S20 returns No), the battery control means 121 checks the waiting time Tw (step S30). If the waiting time Tw is determined to be set as 0 (step S30 returns Yes), the battery control means 121 immediately initiates the charging of the power source (step S32) and stores the battery charging initiation event information to the battery history data 115 (step S33). After that, the battery control means 121 starts to keep monitoring the charging procedure (loop process of steps S34 of obtaining battery status including the current power level Pc' of the power source, S35 of comparing the current power level Pc' with the required power level and checking whether the plug is still connected in step S36).

If the current power source charge level Pc' reaches the required power level Preq (step S35 returns yes), the battery control means 121 stops the charging procedure (step S37), obtains the present time via the present time obtaining means 125 and stores the corresponding battery charging finalization event information with the obtained present time to the battery history data 115 (steps S38 to S39). After that, the process goes back to the step of S100 for recalculation in case the situation is changed. In case the battery control means 121 detects plug disconnection in the charging monitoring loop (step S36 returns No), the battery control means 121 gets out of the loop and goes to the sleep mode (step S40).

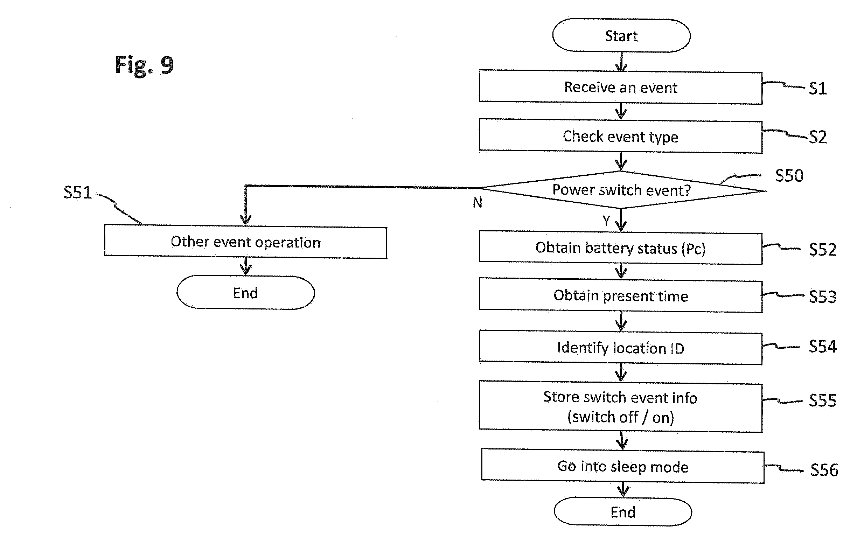

**Fig. 9** shows an example of the flowchart of the process when receiving a power switch event at the step of S2 of Fig. 6A. If the event that was received is a power switch event (e.g. when a power switch of the vehicle is turned on or off), the battery information obtaining means 122 obtains the current battery status including a current power level Pc (step S52) and the present time obtaining means 125 obtains the present time (step S53), and the location identifying means identifies the location ID (step S53). Then, the battery control means 121 stores the corresponding switch event information to the battery history data 112 (step S55) and goes again into the sleep mode (step S56).

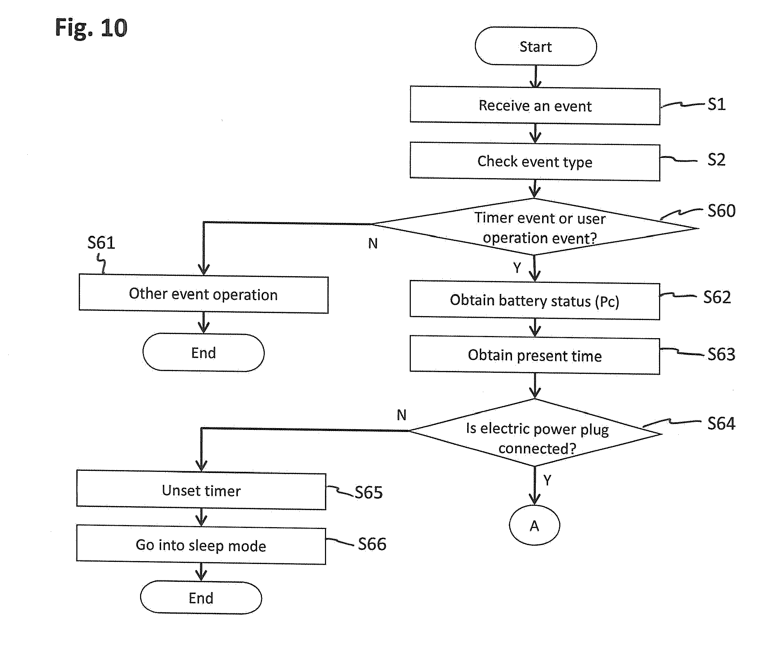

**Fig. 10** shows an example of the flowchart of the process when receiving a timer event or a user operation event at the step of S2 of Fig. 6A. The timer event happens when a timer which has been set has expired (e.g. in case the time period Tw has expired since the time of setting the time period Tw). The user operation event happens when the user changes some configuration in the battery control unit 100 through the user operation unit 500. If the indication of an event that was received is either one of the above two event types, the battery information obtaining means 122 obtains the battery status including the current power level Pc (step S62) and the present time obtaining means 125 obtains the present time (step S63). Then, the battery control means 121 checks whether the electric power plug is connected (step S64). If it is connected (step S64 returns Yes), it goes to the step of S100 in the Fig. 6B in order to recalculate the charging and discharging schedule. If the plug is not connected (step S64 returns No), the battery control means 121 clears the timer if it is set (step S65) and goes to the sleep mode (step S66).

According to the above-described first embodiment and its modifications, there can be provided the following advantages. By controlling the power source charge level/battery charge level on the basis of a required amount Preq, which is estimated based on the statistics of historical data, this aspect helps to significantly prolong the power source/ battery life time without affecting user operation of the electric-based vehicle. Optionally, by limiting battery cycle consumption of charging/discharging based on the user policies of the battery usage, it can be conveniently avoided to consume too much battery cycles due to discharging, which would cause faster battery lifetime deterioration than the user would expect. Further optionally, by considering the possible charging amount W2 during a low cost electricity period (first time period) and/or by controlling discharging to the energy system such that battery charging can be kept within the low electricity hours, charging costs can be significantly reduced. Further optionally, by taking into account the type of the unit time periods, it becomes possible to conveniently adapt the power level management to different life style dependent on the type such as the day type (e.g. weekends, weekdays, etc.)

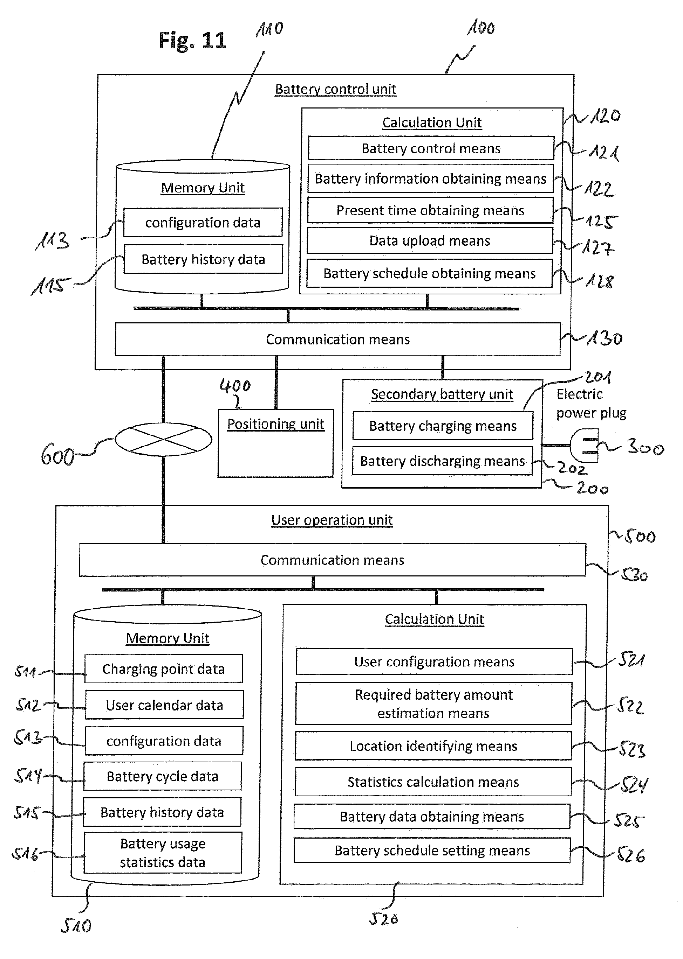

**Fig. 11** exemplarily and schematically shows a general overview of the system architecture of a power level control system according to a second embodiment of the present invention. Same or similar features are referred to with same reference numerals and a detailed description is omitted for the sake of conciseness of the present specification.

As a system, the functionality is similar to the functionality of the system according to **Fig. 1** of the first embodiment and its modifications discussed above, but in the second embodiment, some of the functions are realized in a user operation unit(s) 500 instead of in the battery control unit 100. While the first embodiment relates to a system in which the battery control unit 100 exemplarily serves as an embodiment of an apparatus according to the invention, in the second embodiment, the user operation unit 500 exemplarily serves as an embodiment of an apparatus according to the invention.

The battery control unit 100 of Fig. 11 comprises again a calculation unit 120, a memory unit 110 and a communication means 130, as described with respect to the first embodiment above. The memory unit 110 contains configuration data 113 and battery history data 115. The calculation unit 120 contains a battery control means 121, a battery information obtaining means 122, a present time obtaining means 125, a data upload means 127 and a battery schedule obtaining means 128. The battery schedule obtaining means 128 is configured to obtain a charging and/or discharging schedule from the user operation unit 500.

The user operation unit 500 also comprises a calculation unit 520, a memory unit 510 and communication means 530 similarly to the battery control unit 100. The memory unit 510 contains the charging point data 511 (similar to the charging point data 111), the user calendar data 512 (similar to the user calendar data 112), the configuration data 513 (similar to the configuration data 113), the battery cycle data 514 (similar to the battery cycle data 114), the battery history data 515 (similar to the battery history data 115) and the battery usage statistics data 516 (similar to the battery usage statistics data 116).

The calculation unit 520 contains a user configuration means 521 (similar to the user configuration means 501 in Fig. 1), a required battery amount estimation means 522 (similar to the required battery amount estimation means 122), a location identifying means 523 (similar to the location identifying means 124), a statistics calculation means 524 (similar to the statistics calculation means 126), a battery data obtaining means 525 (similar to the battery information obtaining means 122) and a battery schedule setting means 526 configured to set a battery schedule similar to as described above in connection with step S200.

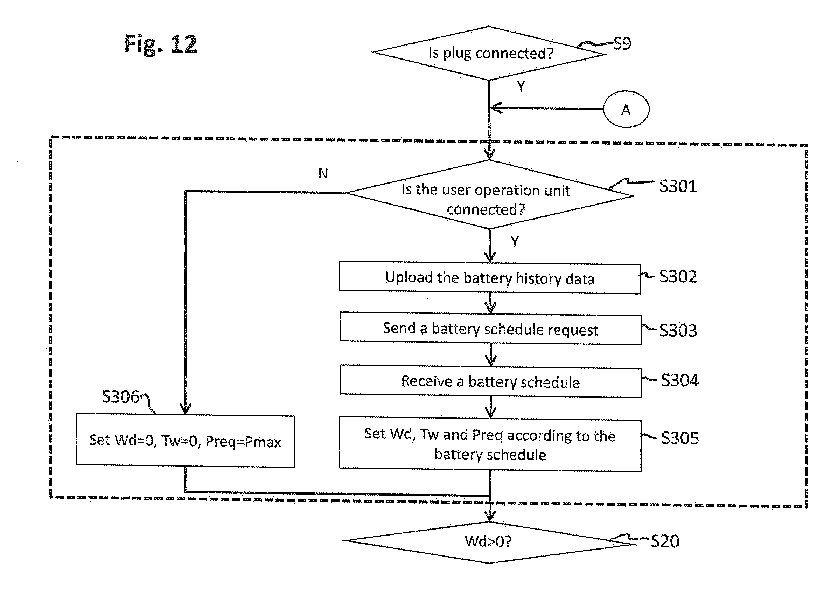

**Fig. 12** exemplarily shows a part of the flowchart of the main process at the battery control unit 100, corresponding to the steps between S9 (returning Yes) and S20 in the flowchart of the first embodiment shown in Figs. 6A and 6B. In the second embodiment, the battery control unit 100 basically follows the flowchart of Figs. 6A and 6B described with reference to the first embodiment and its modifications, but instead of calculating the required battery charge level (i.e. according to step S100 in Figs. 6A and 6B) and the charging/discharging plan (i.e. according to step S200 in Figs. 6A and 6B), the battery control unit 100 asks (requests) the user operation unit 500 to do the corresponding calculation and to give back the result of the battery schedule, by using the battery schedule obtaining means 526.

More specifically, the battery control unit 100 first checks if the user operation unit 100 is connected or not (step S301). If it is not connected, it sets default values as required parameters in the following steps, and then goes to the step of S20. Here as an example, values indicating no discharging and immediate charging till the maximum level are specified (e.g. setting Wd = 0, Tw = 0 and Preq = Pmax). Those values may be also differently set, and a part or all of the algorithms described with reference to the first embodiment may be applied.

On the other hand, if the user operation unit 500 is connected (S301 returns Yes), the battery control unit 100 uploads the battery history data 115 to the user operation unit by means of the data upload means 127 (step S302). This battery history data 115 may contain only the data which has not been uploaded yet. The battery control unit 100 may also upload the battery history data 115 to the user operation unit 500 periodically regardless of this process. Once the battery history data 115 has been uploaded, it does not need to upload again the same data. Moreover, the battery control unit 100 may delete the history data 115 once it has been uploaded to the user operation unit 500.

Next the battery control unit 100 sends a battery schedule request to the user operation unit 500 (step S303). In the battery schedule request, for example, the battery status information can be contained, including the current power level of the power source of the electrically driven vehicle. The battery schedule request may further comprise position information determined by the positioning unit 400 in order to allow determining the position by the location identifying means 523 based on the position information. Alternatively or in addition thereto, the battery control unit 100 may automatically, regularly, and/or even periodically send position information on a current position determined by the positioning unit 400 to the user operation unit 500.

After that, the battery control unit 100 receives the battery schedule information calculated in the user operation unit (step S304). As mentioned above, the determination at the user operation unit 500 may follow the similar process as described above with reference to Figs. 7 and 8. The battery schedule information, for example, may contain a set of time periods to charge the battery (e.g. including Tw, T1 and/or T2 as described above), a target battery level corresponding to Preq, and/or an allowed discharging amount corresponding to Wd as described above. Based on the battery schedule information, in the next step, the battery control means 121 sets the required parameters in the following steps (e.g. Wd, Tw and/or Preq). For example, Tw may be set to the time until the next charging slot starts. And then the battery control unit 100 goes to the step S20 (see Figs. 6A and 6B).

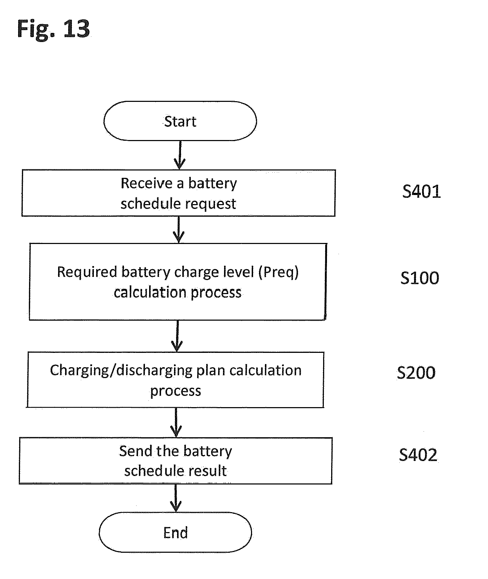

In view of the above, **Fig. 13** exemplarily shows the flowchart of the process at the user operation unit 500 which handles the battery schedule request sent by the battery control unit 100 (step S303). When the user operation unit 500 receives the battery schedule request from the battery control unit 100 (step S401), it follows the step of S100 (see Fig. 7 and the description thereof) and the step of S200 (see Fig. 8 and the description thereof) in order to calculate battery schedule information comprising the required power level Preq of the power source, a discharging policy and/or a charging schedule. Once the calculation is done, the user operation unit 500 sends back the battery schedule information to the battery control unit 100 through the network 600 (step S402).

According to the second embodiment, it is also possible for the user operation unit 500 to handle multiple users and/or multiple battery control units. For example, if the user operation unit 500 is a service center system such as a Telematics center system, it needs to handle multiple subscribers of the service at the same time. In this case, each of the data stored in the memory unit 110 is separately maintained for each subscriber with a certain identifier(s) to identify the subscriber and/or its vehicle. When communicating with the battery control unit(s), the identifier is specified in the message such that the user operation unit 500 can identify with which subscriber it is communicating.

According to yet another embodiment, it is also possible for the user operation unit 500 to handle the step S100, and the battery control unit handles the step of S200. In this case, the user operation unit 100 may set the required power level Preq in the battery control unit 100 in advance at a certain timing. The required power level Preq is basically not dependent on the battery status but on the statistics data, so the user operation unit can calculate it regardless of the situation of the vehicle. Then according to the required power level Preq determined and set by the user operation unit 500, the battery control unit 100 can calculate the discharging policy and/or the charging schedule according to the step of S200.

Summarizing the above, the present invention allows to provide a method and an apparatus for controlling power management of a chargeable electric power source of an electrically driven vehicle which allows to improve the operation convenience for the user of the electrically driven vehicle and, at the same time, to avoid deterioration of the lifetime of the chargeable electric power source.

**Claims**

1. Apparatus for controlling power level management of an electric power source of an electrically driven vehicle which is chargeable when being electrically connected to an electric charging unit for charging the chargeable electric power source,
   the apparatus comprising:

   - memory means (110; 510) configured for storing power consumption information history data indicating one or more power consumption amount values of the chargeable electric power source, each power consumption amount value being associated with a unit time period of one or more past unit time periods,
   - processing means (120; 520) configured for determining a target power level (Preq) of the chargeable electric power source for a present unit time period or a future unit time period on the basis of the power consumption information history data (115, 116; 515, 516) stored in the memory means, and
   - control means (120; 520) configured for controlling power level management of the chargeable electric power source on the basis of the target power level (Preq) determined by the processing means, when the chargeable electric power source is electrically connected to the electric charging unit.

2. Apparatus according to claim 1, **characterized in that**
   each unit time period is associated with one of a plurality of unit time period types, and
   the processing means (120; 520) is configured for determining a target power level (Preq) of the chargeable electric power source for the present unit time period or the future unit time period on the basis of one or more power consumption amount values being associated with unit time periods of the same type as the present unit time period or the future unit time period.

3. Apparatus according to claim 1 or 2, **characterized in that**
   the processing means (120; 520) is configured for determining the target power level (Preq) of the chargeable electric power source on the basis of a statistical evaluation of the one or more power consumption amount values indicated by the power consumption information history data,
   the processing means (120; 520) is configured for determining the target power level (Preq) of the chargeable electric power source on the basis of a predetermined maximum target power level (Pmax) of the chargeable electric power source, and/or
   the processing means (120; 520) is configured for determining the target power level (Preq) of the chargeable electric power source on the basis of a predetermined minimum target power level (Pmin) of the chargeable electric power source.

4. Apparatus according to claim 3, **characterized in that**
the processing means (120; 520) is configured for determining the target power level (Preq) of the chargeable electric power source on the basis of a maximum value of the one or more power consumption amount values indicated by the power consumption information history data;
the processing means (120; 520) is configured for determining the target power level (Preq) of the chargeable electric power source on the basis of an average value of the one or more power consumption amount values indicated by the power consumption information history data; and/or
the processing means (120; 520) is configured for determining the target power level (Preq) of the chargeable electric power source on the basis of a standard deviation value determined on the basis of the one or more power consumption amount values indicated by the power consumption information history data.

5. Apparatus according to claim 4, **characterized in that**
the processing means (120; 520) is configured for determining the target power level (Preq) of the chargeable electric power source on the further basis of an additional contribution value (Creq) being determined independently from the one or more power consumption amount values indicated by the power consumption information history data, wherein the additional contribution value is:

- a constant value,
- a value determined according to a function of a maximum value, a minimum value, an average value, and/or a standard deviation of the one or more power consumption amount values indicated by the power consumption information history data, or
- a value determined according to a function of a number of power consumption amount values indicated by the power consumption information history data, wherein the additional contribution value decreases with increasing number of power consumption amount values indicated by the power consumption information history data.

6. Apparatus according to at least one of the preceding claims, **characterized in that**
the control means (120; 520) is configured for controlling power level management of the chargeable electric power source by controlling charging of the chargeable electric power source when being electrically connected to the electric charging unit for charging the chargeable electric power source on the basis of the target power level (Preq) determined by the processing means and/or discharging of the chargeable electric power source when being electrically connected to an electric charging unit for discharging the chargeable electric power source on the basis of the target power level (Preq) determined by the processing means.

7. Apparatus according to claim 6, **characterized by**
power level determining means (122; 525) configured for determining a current power level (Pc) of the chargeable electric power source,
wherein the processing means (120; 520) is configured for determining a required charging amount (W1) on the basis of a difference between the determined target power level (Preq) of the chargeable electric power source for a present unit time period or future unit time period and the current power level (Pc) of the chargeable electric power source determined by the power level determining means, and
wherein the control means (120; 520) is configured to control power level management of the chargeable electric power source by controlling charging and/or discharging of the chargeable electric power source on the basis of the required charging amount (W1) determined by the processing means (120; 520).

8. Apparatus according to claim 7, **characterized in that**
the control means (120; 520) is configured to control power management of the chargeable electric power source further on the basis of a target charging completed time and on the basis of the condition that the power level of the chargeable electric power source at the target charging completed time corresponds to the target power level (Preq) determined by the processing means (120; 520), when the chargeable electric power source is electrically connected to the electric charging unit.

9. Apparatus according to claim 8, **characterized in that**
the processing means (120; 520) is configured for determining the target charging completed time for the present or future unit time period on the basis of a statistical evaluation of unplug time information history data indicating one or more unplug time values of the chargeable electric power source, each unplug time value indicating a past timing of disconnecting the chargeable electric power source from the electric charging unit and each unplug time value being associated with a unit time period of the one or more past unit time periods.

10. Apparatus according to claim 8 or 9, **characterized in that**
the processing means (120; 520) is further configured for determining an achievable charging amount (W2) based on a present time, the target charging completed time, a start time of a first charging period, an end time of the first charging period and a charging rate during the first charging period,
wherein the achievable charging amount (W2) is determined as the product of the charging rate and the time difference between a first time and a second time, the first time being the earlier time of the target charging completed time and the end time of the first charging period and the second time being the later time of the present time and the start time of the first charging period.

11. Apparatus according to claim 10, **characterized in that**
the control means (120; 520) is configured to compare the achievable charging amount (W2) and the required charging amount (W1) ;
wherein, if the achievable charging amount (W2) is determined to be smaller or equal to the required charging amount (W1), the control means is configured to initiate controlling charging of the chargeable electric power source, and/or
wherein, if the achievable charging amount (W2) is determined to be larger than the required charging amount (W1), the control means is configured to initiate controlling discharging of the chargeable electric power source.

12. Apparatus according to claim 11, **characterized in that**
the processing means (120; 520) is further configured for determining an allowed discharging amount (Wd) on the basis of the achievable charging amount (W2) and the required charging amount (W1), in particular on the basis of the difference between the achievable charging amount (W2) and the required charging amount (W1), wherein the control means is configured to control discharging of the chargeable electric power source on the basis of the allowed discharging amount (Wd).

13. Apparatus according to claim 12, **characterized in that**
the processing means (120; 520) is configured to determine the allowed discharging amount (Wd) as the minimum value of the difference between the achievable charging amount (W2) and the required charging amount (W1) and/or a discharge amount limit (Wd- limit), wherein
the discharge amount limit (Wd- limit) is pre- set by a user or determined on the basis of a battery cycle limit taking into account a theoretical maximum number of battery cycles of the chargeable electric power source, a total number of used battery cycles of the chargeable electric power source, and/or an intended period of use of the chargeable electric power source.

14. Apparatus according to at least one of the preceding claims, **characterized in that** the apparatus is mounted to the electrically driven vehicle,
the apparatus is connectable to a control device of the electrically driven vehicle,
the apparatus is mounted to the electric charging unit,
the apparatus is connectable to a control device of the electric charging unit, or
the apparatus is a server system comprising one or more server computers, the server system being connectable to control devices of one or more electric charging units and/or connectable to control devices of one or more electrically driven vehicles.

15. Method for controlling power level management of an electric power source of an electrically driven vehicle which is chargeable when being electrically connected to an electric charging unit for charging the chargeable electric power source,
the method comprising:

- storing power consumption information history data indicating one or more power consumption amount values of the chargeable electric power source, each power consumption amount value being associated with a unit time period of one or more past unit time periods,
- determining (S102; S104; S115; S114) a target power level (Preq) of the chargeable electric power source for a present unit time period or a future unit time period on the basis of the power consumption information history data, and

- controlling (S34-S36; S22-S24) power level management of the chargeable electric power source on the basis of the target power level (Preq), when the chargeable electric power source is electrically connected to the electric charging unit.

**16.** Computer program product comprising computer program means for causing a computer, which is connectable to a control device of an electrically driven vehicle and/or an electric charging unit for charging a chargeable electric power source of the electrically driven vehicle, to execute the steps of the method according to claim 15.

**Fig. 1**  110   100

Battery control unit

**Memory Unit**

111 — Charging point data

112 — User calendar data

113 — configuration data

114 — Battery cycle data

115 — Battery history data

116 — Battery usage statistics data

**Calculation Unit**

Battery control means — 120

Battery information obtaining means — 121

Required battery amount estimation means — 122

Location identifying means — 123

Present time obtaining means — 124

Statistics calculation means — 125 / 126

Communication means — 130

600

**User operation unit**

user configuration means

500   501

**Positioning unit**

400

**Secondary battery unit**   201

Battery charging means

Battery discharging means

202   200

Electric power plug

300

22

## Fig. 2

*111*

| Location ID | Location info | Discharging | Electricity cost | Home | In-service |
|---|---|---|---|---|---|
| 1 | 43.569074, 7.074494 | Yes | 0h-5h: 8Cent/kWh<br>5h-24h: 15Cent/kWh | Yes | Yes |
| 2 | 43.739042, 7.427205 | No | Unknown | No | No |
| ... | ... | ... | ... | ... | ... |

## Fig. 3

*112*

| Date | Schedule Type | Necessity for full charge | time for ready |
|---|---|---|---|
| 2012/1/1 | Holiday (1) | No | 07:00 |
| 2012/1/2 | Holiday (1) | Yes | 05:30 |
| 2012/1/3 | Holiday (1) | No | 07:00 |
| 2012/1/4 | Workday (2) | No | 06:00 |
| 2012/1/5 | Workday (2) | No | 06:00 |
| 2012/1/6 | Away (3) | No | - |
| 2012/1/7 | Workday (2) | No | 06:00 |
| ... | ... | ... | |

EP 2 657 062 A1

## Fig. 4

MS

| Time | Event type | Battery charge status | Location ID |
|---|---|---|---|
| 2012/1/1 00:00:00 | Electric power plug event (1) | 5.0kWh (25%) | 1 |
| 2012/1/1 00:00:00 | Charging initialization event (3) | 5.0kWh (25%) | 1 |
| 2012/1/1 03:00:00 | Charging finalization event (4) | 12.0kWh (60%) | 1 |
| 2012/1/1 08:00:00 | Electric power unplug event (2) | 12.0kWh (60%) | 1 |
| 2012/1/1 08:30:00 | Power switch on event (5) | 12.0kWh (60%) | 1 |
| 2012/1/1 10:00:00 | Power switch off event (6) | 9.0kWh (45%) | invalid (= -1) |
| 2012/1/1 10:15:00 | Power switch on event (5) | 9.0kWh (45%) | invalid (= -1) |
| 2012/1/1 11:00:00 | Power switch off event (6) | 8.0kWh (40%) | 2 |
| 2012/1/1 11:01:00 | Electric power plug event (1) | 8.0kWh (40%) | 2 |
| ... | ... | ... | ... |
| 2012/1/2 18:00:00 | Discharging enabled event (7) | 10.0kWh (50%) | 1 |
| 2012/1/3 00:00:00 | Discharging disabled event (8) | 8.0kWh (40%) | 1 |
| ... | ... | ... | ... |

**Fig. 5**

116

| Location ID | Schedule type | Total discharging statistics | User operation discharging statistics | Energy system discharging statistics | Unplug timing statistics |
|---|---|---|---|---|---|
| 1 | Holiday (1) | Average: 6kWh<br>Maximum: 10kWh<br># of samples: 20<br>... | Average: 2kWh<br>Maximum: 8kWh<br># of samples: 20<br>... | Average: 5kWh<br>Maximum: 10kWh<br># of samples: 20<br>... | Average: 10:00<br>Earliest: 07:30<br># of samples: 20<br>... |
| 1 | Workday (2) | Average: 5kWh<br>Maximum: 9kWh<br># of samples: 50<br>... | Average: 3kWh<br>Maximum: 7kWh<br># of samples: 50<br>... | Average: 2kWh<br>Maximum: 8kWh<br># of samples: 50<br>... | Average: 07:30<br>Earliest: 06:30<br># of samples: 50<br>... |
| 2 | Holiday (1) | Average: 2kWh<br>Maximum: 4kWh<br># of samples: 5<br>... | Average: 2kWh<br>Maximum: 4kWh<br># of samples: 5<br>... | - | - |
| 2 | Workday (2) | Average: 2kWh<br>Maximum: 3.5kWh<br># of samples: 25<br>... | Average: 2kWh<br>Maximum: 3.5kWh<br># of samples: 25<br>... | - | - |
| ... | ... | ... | ... | ... | ... |

EP 2 657 062 A1

**Fig. 6A**

```
                              ( Start )
                                 │
                                 ▼
                        ┌─────────────────┐
                        │ Receive an event│ ～S1
                        └─────────────────┘
                                 │
                                 ▼
                        ┌─────────────────┐
                        │ Check event type│ ～S2
                        └─────────────────┘
                                 │
                                 ▼
          N            ◇ Electric power plug or unplug ◇ ～S3
   ┌─────────────────────────      event?
   │                                 │ Y
   ▼                                 ▼
┌────────────────────┐    ┌────────────────────────┐
│ Other event        │    │ Obtain battery status(Pc)│ ～S5
│ operation      S4  │    └────────────────────────┘
└────────────────────┘                │
         │                            ▼
         ▼                  ┌────────────────────┐
      ( End )               │ Obtain present time│ ～S6
                            └────────────────────┘
                                      │
                                      ▼
                            ┌────────────────────┐
                            │ Identify location  │ ～S7
                            └────────────────────┘
                                      │
   ┌──────────────┐                   ▼
   │              │        ┌──────────────────────────┐
   │              │        │ Store battery event info │ ～S8
   │              │        │(Electric Power Plug or Unplug)│
   │              │        └──────────────────────────┘
   │              │                   │
   ▼              │      N            ▼
┌──────────────┐  └──────────◇ Is plug connected? ◇ ～S9
│ Unset timer  │ ～S10                │ Y
└──────────────┘                      ▼
      │                             ( A )
      ▼
┌──────────────┐
│Go into sleep │ ～S11
│ mode         │
└──────────────┘
      │
      ▼
   ( End )
```

**Fig. 6B**

EP 2 657 062 A1

**Fig. 7**

Start

S101

Is Battery charge control
mode enabled?

N → S102

Set Preq
to Pmax

Y → S103

Pc < Pmin?

Y

Set Preq to Pmin

S104

Enable No-wait-
charge mode

S105

End

N

S106

Check the location ID

S107

Is location ID valid and the service
of location ID enabled?

N

Y

S109

Is home
flag set?

N

S110

Y

S116

Disable No-wait-
charge mode

Enable No-wait-
charge mode

S108

Enable No-wait-
charge mode

S111

Obtain user calendar
info

S112

Is full charge
requested in the next
day cycle?

Y

S113

N

Obtain battery statistics
data of the location ID and
schedule type of the next
day cycle

S117

Obtain battery statistics
data of the location ID
and schedule type of the
current day cycle

S115

Set Preq to Pmax

Calculate Preq from
the statistics info

S114

End

End

**Fig. 8**

Start

S201 — No-wait-charge mode is enabled?

Y →
Set potential discharging amount (Wd) to 0 — S202
Set Tw to 0 — S203
End

N ↓
Calculate required charging amount (=W1) — S204
Obtain time-for-ready in the next day cycle — S205
Obtain electricity cost info — S206
S207 — Calculate possible charging amount during the low electricity cost period before time-for-ready (=W2)

S208 — W2>W1?

Y → S220 — Is discharging mode enabled?

N ↓
Set Wd to 0 — S209
Calculate the charging schedule — S210
Calculate time till the next charging slot (=T1) — S211
Set Tw to T1 — S212

S220 Is discharging mode enabled?

Y →
S224 — Calculate discharging amount limit (Wd-limit)
S225 — Set Wd to min{W2-W1, Wd-limit}
S226 — Wd > 0?

N ↓
Set Wd to 0 — S221
Calculate time till the next low electricity cost period starts (=T2) — S222
Set Tw to T2 — S223

End

EP 2 657 062 A1

**Fig. 9**

Start

↓

Receive an event — S1

↓

Check event type — S2

↓

Power switch event? — S50

N → Other event operation — S51

↓

End

Y ↓

Obtain battery status (Pc) — S52

↓

Obtain present time — S53

↓

Identify location ID — S54

↓

Store switch event info
(switch off / on) — S55

↓

Go into sleep mode — S56

↓

End

**Fig. 10**

```
          Start
            │
            ▼
   ┌──────────────────┐
   │  Receive an event │  S1
   └──────────────────┘
            │
            ▼
   ┌──────────────────┐
   │  Check event type │  S2
   └──────────────────┘
            │
            ▼
       ◇ Timer event or user
         operation event?  ◇  S60
         │              │
      N  │              │ Y
         │              ▼
         │     ┌──────────────────────┐
         │     │ Obtain battery        │  S62
         │     │ status (Pc)           │
         │     └──────────────────────┘
         │              │
         │              ▼
         │     ┌──────────────────────┐
         │     │ Obtain present time   │  S63
         │     └──────────────────────┘
         │              │
         │              ▼
         │        ◇ Is electric power plug
         │          connected?  ◇  S64
         │          │          │
         │        N │          │ Y
         ▼          ▼          ▼
  ┌──────────────┐  ┌──────────┐  ( A )
  │ Other event  │  │ Unset    │  S65
  │ operation    │  │ timer    │
  │        S61   │  └──────────┘
  └──────────────┘       │
         │               ▼
         ▼        ┌──────────────┐
       ( End )    │ Go into      │  S66
                  │ sleep mode   │
                  └──────────────┘
                        │
                        ▼
                      ( End )
```

31

**Fig. 11**    *110*    *100*

Battery control unit

Calculation Unit    *120*

Battery control means    *121*

Battery information obtaining means    *122*

Present time obtaining means    *125*

Data upload means    *127*

Battery schedule obtaining means    *128*

Memory Unit

configuration data

Battery history data

*113*

*115*

Communication means    *130*

*400*

*600*

Positioning unit

Secondary battery unit    *201*

Battery charging means

Battery discharging means    *202*

Electric power plug

*300*

*200*

User operation unit    *500*

Communication means    *530*

Memory Unit

Charging point data    *511*

User calendar data    *512*

configuration data    *513*

Battery cycle data    *514*

Battery history data    *515*

Battery usage statistics data    *516*

Calculation Unit

User configuration means    *521*

Required battery amount estimation means    *522*

Location identifying means    *523*

Statistics calculation means    *524*

Battery data obtaining means    *525*

Battery schedule setting means    *526*

*510*    *520*

**Fig. 12**

```
                    ┌─────────────────────┐
                    │  Is plug connected? │──── S9
                    └─────────────────────┘
                              │ Y
                              │←──── (A)
                              ▼
            N     ┌──────────────────────────────┐
       ┌──────────│   Is the user operation unit │──── S301
       │          │         connected?           │
       │          └──────────────────────────────┘
       │                      │ Y
       │                      ▼
       │          ┌──────────────────────────────┐
       │          │ Upload the battery history data│── S302
       │          └──────────────────────────────┘
       │                      │
       │                      ▼
       │          ┌──────────────────────────────┐
       │          │ Send a battery schedule request│── S303
       │          └──────────────────────────────┘
       │                      │
       │                      ▼
       │          ┌──────────────────────────────┐
       │          │   Receive a battery schedule │──── S304
       │          └──────────────────────────────┘
       │                      │
       ▼                      ▼
 ┌──────────────────┐   ┌──────────────────────────────┐
 │ Set Wd=0, Tw=0,  │   │ Set Wd, Tw and Preq according │── S305
 │   Preq=Pmax      │   │    to the battery schedule    │
 └──────────────────┘   └──────────────────────────────┘
  S306
                              │
                              ▼
                    ┌─────────────────────┐
                    │        Wd>0?        │──── S20
                    └─────────────────────┘
```

EP 2 657 062 A1

33

# Fig. 13

Start

Receive a battery
schedule request — S401

Required battery charge level (Preq)
calculation process — S100

Charging/discharging plan calculation
process — S200

Send the battery
schedule result — S402

End

Europäisches
Patentamt

European
Patent Office

Office européen
des brevets

# EUROPEAN SEARCH REPORT

**Application Number**

EP 12 16 5542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/103249 A2 (GREENWAVE REALITY PTE LTD [SG]; CHRISTENSEN PETER [DK]; MANNICHE MARTI) 25 August 2011 (2011-08-25) | 1-6,15, 16 | INV. B60L11/18 B60L15/20 |
| Y | * the whole document * | 6-14 | |
| Y | US 2009/313098 A1 (HAFNER JAMES LEE [US] ET AL) 17 December 2009 (2009-12-17) * the whole document * | 6-14 | |
| X | US 2010/076825 A1 (SATO YASUO [JP] ET AL) 25 March 2010 (2010-03-25) * the whole document * | 1,6-13 | |

TECHNICAL FIELDS
SEARCHED (IPC)

B60L

The present search report has been drawn up for all claims

| Place of search | Date of completion of the search | Examiner |
|---|---|---|
| Munich | 19 December 2012 | Vanata, Daniela |

EPO FORM 1503 03.82 (P04C01)

## ANNEX TO THE EUROPEAN SEARCH REPORT
## ON EUROPEAN PATENT APPLICATION NO.

EP 12 16 5542

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2012

| Patent document cited in search report | | Publication date | Patent family member(s) | | Publication date |
|---|---|---|---|---|---|
| WO 2011103249 | A2 | 25-08-2011 | EP<br>WO | 2537229 A2<br>2011103249 A2 | 26-12-2012<br>25-08-2011 |
| US 2009313098 | A1 | 17-12-2009 | US<br>US | 2009313098 A1<br>2012221160 A1 | 17-12-2009<br>30-08-2012 |
| US 2010076825 | A1 | 25-03-2010 | JP<br>JP<br>US | 4713623 B2<br>2010081722 A<br>2010076825 A1 | 29-06-2011<br>08-04-2010<br>25-03-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110210698 A1